(19) Europäisches Patentamt

European Patent Office

Office européen des brevets

(11) **EP 1 183 301 B1**

(12) **FASCICULE DE BREVET EUROPEEN**

(45) Date de publication et mention
de la délivrance du brevet:
**05.11.2003 Bulletin 2003/45**

(21) Numéro de dépôt: **00925407.9**

(22) Date de dépôt: **05.05.2000**

(51) Int Cl.[7]: **C08G 83/00**, C08G 69/26,
C08G 69/36, C08G 69/02,
C08G 69/48, C08G 69/32,
C08G 69/00

(86) Numéro de dépôt international:
**PCT/FR00/01229**

(87) Numéro de publication internationale:
**WO 00/068298 (16.11.2000 Gazette 2000/46)**

(54) **COPOLYAMIDE HYPERBRANCHE, COMPOSITION A BASE DE CE COPOLYAMIDE HYPERBRANCHE ET PROCEDE D'OBTENTION DE CE DERNIER**

HYPERVERZWEIGTES COPOLYAMID, ZUSAMMENSETZUNG BESTEHEND AUS DIESEM COPOLYAMID UND VERFAHREN ZU DESSEN HERSTELLUNG

HYPERBRANCHED COPOLYAMIDE, COMPOSITION BASED ON SAID HYPERBRANCHED COPOLYAMIDE AND METHOD FOR OBTAINING SAME

(84) Etats contractants désignés:
**AT BE CH CY DE DK ES FI FR GB GR IE IT LI LU MC NL PT SE**
Etats d'extension désignés:
**SI**

(30) Priorité: **05.05.1999 FR 9905885**

(43) Date de publication de la demande:
**06.03.2002 Bulletin 2002/10**

(73) Titulaire: **Rhodianyl**
**92512 Boulogne-Billancourt Cédex (FR)**

(72) Inventeurs:
• **BOUQUEREL, Franck**
**F-69003 Lyon (FR)**
• **SASSI, Jean-François**
**F-69390 Millery (FR)**

(74) Mandataire: **Esson, Jean-Pierre**
**Rhodia Services,**
**Direction de la Propriété Industrielle,**
**Crit-Carrières,**
**B.P. 62**
**69192 Saint-Fons Cédex (FR)**

(56) Documents cités:
**WO-A-92/08749        WO-A-93/09162**
**WO-A-95/06080        WO-A-95/06081**
**WO-A-99/03909**

Remarques:
Le dossier contient des informations techniques présentées postérieurement au dépôt de la demande et ne figurant pas dans le présent fascicule.

**Description**

Le domaine de l'invention est celui des polymères hyperbranchés, également dénommés polymères dendritiques ou polymères fractals, constitués par un réseau tridimensionnel de monomères multifonctionnels ayant réagi les uns avec les autres, selon des réactions, par exemple, de condensation du type amidification.

La présente invention concerne un copolyamide hyperbranché du type de ceux obtenus par réaction entre, notamment, des monomères plurifonctionnels, par exemple trifonctionnels et bifonctionnels, chacun des monomères étant porteurs d'au moins deux fonctions réactives de polymérisation différentes.

La présente invention vise également les utilisations de ces polymères hyperbranchés, par exemple, comme charges ou additifs dans des compositions polymères, ces dernières constituant un autre objet de la présente invention.

L'invention a également trait à un procédé de préparation d'un tel polyamide hyperbranché ainsi que des compositions susceptibles de le contenir.

Les polymères hyperbranchés ont généralement une forme sensiblement globulaire de taille variant de quelques nanomètres à plusieurs dizaines de nanomètres. Ces polymères fractals présentent une très faible cristallinité, une très faible compressibilité et une absence de retrait. Compte tenu de leur structure globulaire, ils sont dotés d'une viscosité à l'état fondu, plus faible que celle de polymères linéaires de poids moléculaire élevé identique. Il a été montré pour certains polymères fractals qu'ils possèdent des aptitudes de modificateurs de rhéologie (viscosité fondue) dans des compositions polymères comprenant des polymères linéaires de haut poids moléculaire et de haute viscosité.

C'est ainsi que la référence *"Macromolécules, 25, 5561-5572 (1992)- Y.H.KIM AND O.W. WEBSTER"* décrit des polypnénylènes hyperbranchés synthétisés à partir de monomères de type $AB_2$ (e.g. acide ; 5-dibromophénylboronique et réactif de Grignard de type 3,5-dihalophényle/catalyse Pd-Ni). KIM et WEBSTER font par ailleurs état de la réduction de la viscosité à l'état fondu de polystyrènes, obtenue par incorporation des polyphénylènes hyperbranchés sus-visés.

En outre, la référence *"polymeric materials science and engineering PMSE, vol. 77, meeting September 8-11, 1997, American Chemical Society/KHADIR and GAUTHIER"* divulgue des polymères arborescents constitués par des macromolécules hyperbranchés et à structure dendritiques. Ces polymères hyperbranchés sont obtenus par réaction d'un polystyrène linéaire partialement chlorométhylé avec des anions polystyryles, de manière à former un noyau sur lequel on vient greffer par différentes réactions et notamment par chlorométhylation des générations successives de polymères arborescents. Les auteurs ont mis en évidence le fait que ces polymères arborescents sont des modificateurs de rhéologie à l'état fondu pour des polymères linéaires du type polystyrène et de type polyméthylméthacrylate. En particulier, ces polymères hyperbranchés permettent une diminution ou une augmentation significative de la viscosité à l'état fondu.

Ces polymères hyperbranchés décrits comme modificateurs de rhéologie à l'état fondu, sont des polyphénylènes et des polystyrènes, ce qui les rend utilisables uniquement avec des polymères linéaires, pour autant que ceux-ci présentent des fonctions de polymérisation chimiquement compatibles à celles des susdits polymères hyperbranchés. Il en résulte que ces derniers ne sont pas compatibles chimiquement avec par exemple les polyamides et ne peuvent donc pas servir de modificateurs de rhéologie pour ces derniers.

On connaît par ailleurs des polyamides hyperbranchés (PAHB).

A titre d'illustrations de tels polyamides à structure dendritique, on peut citer la demande PCT WO 92/08 749 qui décrit des polymères de type polyamide et de type polyester hyperbranchés obtenus par un procédé de polymérisation en une seule étape, faisant intervenir un monomère de formule **A**-R-**B₂**. Les polymères hyperbranchés obtenus sont des copolymères globulaires de haut poids moléculaire présentant une multiplicité de groupements fonctionnels particuliers à leur périphérie. Les fonctions réactives de polymérisation **A**, **B** sont portées par une entité aromatique choisie dans le groupe comportant les phényles, les naphtyles, les biphényles, les diphényléthers, les diphénylsulfones et la benzophénone. Les copolymères selon cette demande PCT, sont obtenus par copolymérisation de monomères trifonctionnels aromatiques **A**-R-**B₂** avec éventuellement un monomère bifonctionnel **A**-R-**B**. Les fonctions réactives de polymérisation **AB** considérées sont : OH, COOH, NH₂.

La demande WO 97/26 294 décrit un polymère hyperbranché du type polyamide, comprenant des unités monomères multifonctionnelles de type **AQB$_x$**, x étant supérieur ou égal à 2, Q représentant un radical 1, 3, 5 triazine substitué par des groupements aminés en positions 2, 4, 6, ces groupements aminés étant porteurs de radicaux comprenant des fonctions de polymérisation **A**, **B** qui peuvent être : NH₂, COOH.

Les demandes de brevet PCT WO 93/09162, WO 95/06080 et WO 95/06 081 divulguent des polymères fractals, greffés ou non, réticulés où non et associés ou non à des polymères linéaires. Les polymères fractals considérés sont des copolyamides obtenus, par exemple, par réaction de monomères trifonctionnels de type **AB₂** (e.g. acide 5-amino-isophtalique-AIPA-), de monomères bifonctionnels de type **AB** (e.g. acide para-aminobenzoïque-APB-) et de monomères polyfonctionnels de type **B₃** (e.g. acide 1, 3, 5-benzène tricarboxylique) en quantité mineure par rapport à **AB₂** et **AB**.

Ces polymères tridimensionnels sont donc constitués d'unités récurrentes aromatiques présentant des motifs électrophiles ou nucléophiles à l'extérieur. (fonctions réactives de polymérisation A,B : COOH, NH$_2$). Ces demandes PCT décrivent également des polymères étoiles constitués par un noyau formé par les polymères fractals sus-mentionnés, sur la périphérie desquels sont greffées des chaînes polymères linéaires.

Il a également été proposé, dans la demande de brevet français n° 2 766 197, un copolyamide thermoplastique du type arbre statistique. Ce copolyamide résulte de la réaction :

> ➤ entre un monomère plurifonctionnel contenant au moins 3 fonctions réactives **A**-R-**B$_2$** (NH$_2$, COOH), e.g. acide-5-amino-isophtalique, 6-amino- undécandioïque,
> ➤ et des monomères bifonctionnels **AB** (e.g. ε-caprolactame) classiquement utilisés pour la fabrication de polyamides linéaires de type PA 6. Le rapport en % molaire entre les monomères multifonctionnels **AB$_2$** et les monomères bifonctionnels **AB** est : $0,01 \leq$ AB$_2$ / **AB** $\leq 5$.

Dans ces conditions, il n'est pas possible que de tels polyamides de type arbre statistique, ajouté à un polyamide linéaire aient un effet sur la rhéologie à l'état fondu de ces polyamides linéaires. Pour atteindre ce résultat, il conviendrait que les polyamides dendritiques soient miscibles aux polyamides linéaires à l'échelle moléculaire. Cela revient à dire qu'il faudrait que les PAHB ne soient pas solides mais thermoplastiques, à la température de fusion des polyamides linéaires dans lesquels ils sont incorporés aux fins de modifier la viscosité à l'état fondu.

Force est donc de constater que l'art antérieur n'apporte pas de solution satisfaisante à la problématique qui consiste à fournir des polyamides hyperbranchés, d'une part, compatibles avec des polyamides linéaires ou branchés et, d'autre part, miscibles, ou tout au moins dispersibles à l'échelle moléculaire dans des polyamides linéaires ou branchés fondus, de façon à disposer d'un PAHB apte à modifier la rhéologie à l'état fondu de ces polyamides linéaires ou branchés.

Il pourrait être également intéressant d'enrichir la famille des polymères dendritiques, à l'aide de nouvelles structures polymères polyamide tridimensionnelles hyperbranchées, présentant des propriétés exploitables dans de nombreuses applications.

L'un des objectifs essentiels de la présente invention est de pallier les carences de l'art antérieur en fournissant un nouveau copolyamide hyperbranché du type de ceux obtenus par réaction entre :

⋏ au moins un monomère de formule (**I**) suivante :

$$(\mathbf{I}) \qquad \mathbf{A}\text{-R-}\mathbf{B}_f$$

dans laquelle **A** est une fonction réactive de polymérisation d'un premier type, **B** est une fonction réactive de polymérisation d'un second type et capable de réagir avec **A**, R est une entité hydrocarbonée comportant éventuellement des hétéroatomes, et f est le nombre total de fonctions réactives **B** par monomère : $f \geq 2$, de préférence $2 \leq f \leq 10$ ;

⋏ et au moins un monomère bifonctionnel de formule (**II**) suivante :

$$(\mathbf{II}) \qquad \mathbf{A'}\text{-R'-}\mathbf{B'} \text{ ou les lactames correspondants,}$$

dans laquelle **A'**, **B'**, **R'** ont la même définition que celle donnée ci-dessus respectivement pour **A**, **B**, **R** dans la formule (**I**) ;

caractérisé
➜ en ce que le rapport molaire **I/II** se définit comme suit :

$$0,05 < \mathbf{I/II}$$

et de préférence

$$0,125 \leq \mathbf{I/II} \leq 2 ;$$

➜ et en ce qu'au moins l'une des entités **R** ou **R'** d'au moins l'un des monomères (**I**) ou (**II**) est aliphatique, cycloaliphatique ou arylaliphatique.

Ces nouveaux polymères dendritiques - notamment polyamides hyperbranchés PAHB - ont une structure originale, qui résulte de la présence d'une proportion judicieusement choisie de monomères bi-fonctionnels **A'-R'-B'**.

La présence d'un squelette hydrocarboné, non aromatique, porteur des fonctions **A**, **B** ou **A'**, **B'** dans les monomères (**I**) et (**II**) respectivement est une caractéristique permettant d'obtenir des excellentes propriétés des polymères hyperbranchés selon l'invention.

En outre, ces derniers sont également tout à fait performants à titre de charge fonctionnelle dans des compositions polymères. En particulier, s'agissant par exemple des polyamides hyperbranchés (PAHB), on observe qu'ils sont tout à fait compatibles et dispersibles à l'état fondu dans des polyamides linéaires, en particulier dans le polyamide 6, de sorte qu'ils peuvent développer parfaitement des effets rhéofluidifiants ou rhéoviscosants. Les polymères hyperbranchés selon l'invention et notamment les PAHB, permettent aussi d'améliorer les propriétés mécaniques en traction (module d'élasticité, allongement et contrainte à la rupture), des polymères - par exemple polyamide - dans lesquels ils sont incorporés.

Par ailleurs, ces nouveaux polymères dendritiques ont un effet de retardement de la cristallisation et donc la cristallinité du polymère dans lequel ils sont ajoutés à titre de charge fonctionnelle. Cela offre la possibilité d'obtenir des copolymères chargés transparents.

Les polymères hyperbranchés selon l'invention ont également pour effet d'augmenter la température de transition vitreuse des polymères linéaires ou branchés dans lesquels ils sont ajoutés.

Un autre avantage de ces polymères dendritiques polyamide, tient à leur mode d'obtention qui est simple et économique.

Selon une disposition préférentielle de l'invention, le copolyamide hyperbranché est caractérisé en ce que :

Δ les entités hydrocarbonées R, R' des monomères (I) et (II) respectivement, comprenant chacune :

⩔ i au moins un radical aliphatique linéaire ou ramifié ;
⩔ ii et/ou au moins un radical cycloaliphatique ;
⩔ iii et/ou au moins un radical aromatique comportant un ou plusieurs noyaux aromatiques ;

ces radicaux (i), (ii), -(iii) pouvant éventuellement être substitués et/ou comporter des hétéroatomes ;

Δ **A**, **A'** est une fonction réactive du type aminé, sel d'aminé, ou du type acide, ester, halogénure d'acide ou amide ;

Δ**B**, **B'** est une fonction réactive du type acide, ester, halogénure d'acide ou amide ou du type aminé, sel d'aminé.

Ainsi, les fonctions réactives de polymérisation **A**, **B**, **A'**, **B'** plus spécialement retenues sont celles appartenant au groupe comprenant les fonctions carboxyliques et aminés.

Par fonction carboxylique, on entend au sens de l'invention, toute fonction acide COOH, ester ou anhydride.

Dans le cas où A, A' correspond à une aminé ou à un sel d'aminé, alors **B**, **B'** représente un acide, un ester, un halogénure d'acide ou un amide et réciproquement.

Il convient de noter qu'à partir d'un rapport molaire (**I**)/(**II**) = 0,5 molaire, le polymère hyperbranché selon l'invention commence à présenter des propriétés rhéofluidifiantes. Sans vouloir être lié par la théorie, cela peut s'expliquer par le fait qu'en dessous de (**I**) / (**II**) = 0,5, la structure est relativement peu branchée, tandis qu'au dessus de (**I**)/(**II**) = 0,5, la structure dendritique devient une structure globulaire plus marquée.

Suivant une variante avantageuse de l'invention, le polymère hyperbranché peut être constitué d'un mélange de plusieurs monomères (**I**) différents et de plusieurs monomères (**II**) différents, pour autant que l'un au moins de ces monomères soit aliphatique, cycloaliphatique ou arylaliphatique.

Outre les monomères (**I**) plurifonctionnels et les monomères (**II**) bifonctionnels, on peut envisager d'avoir un polymère hyperbranché selon l'invention comprenant également, à titre d'éléments constitutifs, des monomères mono ou pluri-fonctionnels (**III**) de type "coeur" (ou "noyau") et/ou des monomères monofonctionnels (**IV**) de type "limiteur de chaîne".

Les monomères de type "coeur" éventuellement compris dans le copolyamide et/ou ester hyperbranché selon l'invention, peuvent être ceux de formule (**III**) suivante :

$$(\textbf{III}) \qquad R^1(\textbf{B"})_n$$

dans laquelle :

○ $R^1$ est un radical hydrocarboné substitué ou non, du genre silicone, alkyle linéaire ou ramifié, aromatique, alkylaryle, arylalkyle ou cycloaliphatique pouvant comprendre des insaturations et/ou des hétéroatomes ;

○ **B"** est une fonction réactive de même nature que **B** ou **B'** ;

° n ≥ 1, de préférence 1 ≤ n ≤ 100.

Les monomères de type "limiteur de chaîne" éventuellement compris dans le copolyamide hyperbranché selon l'invention peuvent être ceux de formule (**IV**):

$$(\mathbf{IV}) \qquad R^2\text{-}\mathbf{A''}$$

dans laquelle :

° $R^2$ est un radical hydrocarboné substitué ou non, du genre silicone, alkyle linéaire ou ramifié, aromatique, arylalkyle, alkylaryle ou cycloaliphatique pouvant comprendre une ou plusieurs insaturations et/ou un ou plusieurs hétéroatomes.
° et **A''** est une fonction réactive de même nature que **A** ou **A'**.

Selon une modalité avantageuse de l'invention, au moins une partie des monomères bifonctionnels (**II**) se trouvent sous forme de prépolymère.

Il peut en être de même en ce qui concerne les monomères (**III**) de type "coeur" voire les monomères (**IV**) de type "limiteur de chaîne".

Les radicaux $R^1$ et $R^2$ peuvent comprendre avantageusement des fonctionnalités conférant des propriétés particulières au polymère hyperbranché. Ces fonctionnalités ne réagissent pas avec les fonctions **A**, **B**, **A'**, **B'** au cours de la polymérisation du PAHB.

Suivant un mode préféré de réalisation de l'invention, f = 2 de sorte que le monomère (**I**) est trifonctionnel : **ARB$_2$**, **A** = fonction aminé, **B** = fonction carboxylique et R = radical aromatique.

Le polymère hyperbranché obtenu, selon l'invention, à partir des monomères **I** et **II** peut être assimilé à des structures arborescentes dotées d'un point focal formé par la fonction **A** et d'une périphérie garnie de terminaisons **B**. Quand ils sont présents, les monomères (**III**) forment des noyaux. Avantageusement, le polymère hyperbranché peut comprendre des monomères monofonctionnels (**IV**) "limiteur de chaîne", situé en périphérie des dendrimères selon l'invention.

Par ailleurs, les monomères bifonctionnels (**II**) sont des éléments d'espacement dans la structure tridimensionnelle. Ils permettent un contrôle de la densité de branchement et sont notamment à l'origine des propriétés intéressantes des polymères hyperbranchés selon l'invention.

Les monomères (**III**) et (**IV**) permettent de contrôler le poids moléculaire.

Avantageusement, le monomère (**I**) est par exemple choisi dans le groupe comprenant :

- l'acide 5-amino-isophtalique,
- l'acide 6-amino-undécandioïque,
- le diacide 3-aminopimélique,
- l'acide aspartique,
- l'acide 3,5-diaminobenzoïque,
- l'acide 3,4-diaminobenzoïque,
- la lysine,
- et leurs mélanges.

Avantageusement et par exemple, le monomère bifonctionnel de formule (**II**) est :

- l'ε-caprolactame et/ou l'aminoacide correspondant : l'acide aminocaproïque,
- et/ou l'acide para ou métaaminobenzoïque,
- et/ou l'acide amino-11-undécanoïque,
- et/ou le lauryllactame et/ou l'aminoacide correspondant :

  l'acide amino-12-dodécanoïque.

Plus généralement, les monomères bifonctionnels de formule (**II**) peuvent être les monomères utilisés pour la fabrication de polyamides thermoplastiques linéaires. Ainsi, on peut citer les composés ω-aminoalcanoïques comportant une chaîne hydrocarbonée ayant de 4 à 12 atomes de carbone, ou les lactames dérivés de ces acides aminés comme l'ε-caprolactame.

On peut aussi utiliser plusieurs types de monomères (II) simultanément. L'utilisation de plusieurs types de monomères (II) peut permettre de modifier et controler la température de transition vitreuse des copolyamides hyperbranchées et/ou des compositions comportant une matrice à base d'un polymère thermoplastique et ledit copolyamide hyperbranché.

Le monomère bifonctionnel (II) préféré pour la mise en oeuvre de l'invention est l'ε-caprolactame.

A titre d'exemples, les monomères (III) peuvent être, quant à eux :

⇒ des diacides carboxyliques aliphatiques saturés ayant de 6 à 36 atomes de carbone tels que, par exemple, l'acide adipique, l'acide azélaïque, l'acide sébacique, l'acide dodécanoïque,

⇒ des diamines biprimaires, de préférence aliphatique saturés linéaires ou ramifiés ayant de 6 à 36 atomes de carbone tels que, par exemple, l'hexaméthylènediamine, la triméthylhexaméthylène-diamine, la tétraméthylèndiamine, la n-xylènediamine,

⇒des composés polymères tels que les polyoxyalkylènes aminés commercialisés sous la marque JEFFAMINE® ,

⇒ou bien encore chaîne silicone aminée, e.g. polydiméthylsiloxane mono ou diamine.

⇒ des monoamines aromatiques ou aliphatiques,

⇒ des monoacides aromatiques ou aliphatiques, ou

⇒ des triamines ou triacides aromatiques ou aliphatiques.

Les monomères (III), "coeur" préférés sont : l'hexaméthylène-diamine et l'acide adipique, la JEFFAMINE® T403 commercialisée par la société Huntsman, l'acide 1,3,5-benzène tricarboxylique, la 2,2,6,6-tetra-(β-carboxyéthyl) cyclohexanone.

Selon une autre caractéristique préférentielle de l'invention, le rapport molaire des monomères (IV) sur les monomères bifonctionnels (I) est défini comme suit :

$$\frac{(IV)}{(I)} \leq 10$$

de préférence

$$\frac{(IV)}{(I)} \leq 5$$

et plus préférentiellement encore

$$0 \leq \frac{(IV)}{(I)} \leq 2$$

Concernant le rapport molaire des monomères fonctionnels (III) "noyaux" par rapport aux monomères pluri-fonctionnels (I), il peut se définir comme suit :

$$\frac{(III)}{(I)} \leq 1$$

de préférence

$$\frac{(III)}{(I)} \leq 1/2$$

et plus préférentiellement encore

$$0 \leq \frac{(III)}{(I)} \leq 1/3$$

Avantageusement, le copolyamide hyperbranché selon l'invention peut se présenter sous forme de particules constituées chacune par une ou plusieurs structures arborescentes. Un tel copolyamide a pour autre caractéristique intéressante le fait de pouvoir être fonctionnalisé :

◊ au point focal de la (ou des) structure(s) arborescente(s), par l'intermédiaire de monomères (III), éventuellement porteurs de la ou des fonctionnalités considérées,

◊   et/ou à la périphérie des structures arborescentes, par l'intermédiaire de monomères (**IV**), éventuellement porteurs de la ou des fonctionnalités considérées.

◊   et/ou éventuellement au sein même de la structure, les fonctionnalités considérées étant portées par l'intermédiaire de monomères (**II**).

S'agissant de l'aspect synthèse qui fait partie intégrante de la présente invention, on précisera que les copolyamides hyperbranchés selon l'invention, peuvent être obtenus par un procédé caractérisé en ce qu'il consiste essentiellement à réaliser une polycondensation entre des monomères (**I**) et des monomères (**II**) qui réagissent entre eux et éventuellement avec des monomères (**III**) et/ou (**IV**) ; et ce dans des conditions de température et de pression appropriées.

Cette polymérisation s'opère en phase fondue, en phase solvant ou en phase solide, de préférence en phase fondue ou solvant ; le monomère (**II**) jouant avantageusement le rôle de solvant.

Le procédé de synthèse des polymères hyperbranchés selon l'invention, peut être mis en oeuvre en présence d'au moins un catalyseur de polycondensation et éventuellement d'au moins un composé anti-oxydant. De tels catalyseurs et composés antioxydants sont connus de l'homme du métier. A titre d'exemple de catalyseurs, on cite les composés phosphorés tels que l'acide phosphorique, l'acide phosphoreux, l'acide hypophosphoreux, les acides phenylphosphoniques, tels que l'acide 2-(2'-pyridyl) ethylphosphonique, les phosphites tels que le tris(2,4-di-tert-butylphenyl)phosphite. A titre d'exemple d'antioxydant, on cite les antioxydants à base phénolique bi-encombrés, tels que la N,N'-hexaméthylene bis(3,5-di-tert-butyl-4-hydroxy-hydrocinnamamide), le 5-tert-butyl-4-hydroxy-2-methylphenyl sulfure.

La polymérisation par polycondensation s'effectue, par exemple, dans des conditions et selon un mode opératoire équivalents à ceux utilisés pour la fabrication du polyamide linéaire correspondant aux monomères (**II**).

L'un des objets de la présente invention est constitué par des composés fonctionnalisés à base d'un copolyamide hyperbranché.

Selon un premier mode de réalisation, les fonctionnalités sont obtenues par utilisation de monomères portant les fonctions ou groupements chimiques désirés. On cite par exemple les fonctions ou groupements etholylés, sulfonatés. Les fonctions ou groupements sont des fonctions ou motifs différents des fonctions amides, et sont portés par au moins un des monomères choisis parmi les monomères (**I**), (**II**), (**III**) ou (**IV**). Ces composés peuvent être obtenus par réalisation d'une polycondensation entre des monomères (I) entre eux et avec des monomères (**II**) qui réagissent également entre eux et éventuellement avec des monomères (**III**) et/ou (**IV**), au moins un des monomère portant une fonctionnalité chimique différente des fonctions chimiques réagissant pour former les liaisons amides.

Selon un deuxième mode de réalisation, les fonctionnalités particulières sont obtenues par traitement d'un copolyamide hyperbranché, après synthèse de celui-ci. Il peut par exemple s'agir de l'obtention d'une liaison covalente ou ionique ou d'une complexation entre une fonction portée en extrémité de chaîne et un composé chimique. Le composé chimique est ainsi lié à au moins une partie des fonctions terminales. Il est ainsi possible d'associer des ions métalliques aux copolyamides hyperbranchés, par exemple par complexation ou échange de cations, ou de modifier les extrémités de chaînes par réactions chimiques. On cite à titre d'exemple des composés chimiques à base organique et liés aux fonctions terminales par liaison covalente. On cite aussi des composés choisi parmi les ions, les ions métalliques, les particules à base de métaux ou oxyde de métaux, liés aux fonctions terminales par interaction ionique ou chélatente.

A titre d'exemple, on peut faire réagir des fonctions aminés terminales, par exemples portées par des monomères (II), sur des époxy, des composés acryliques ou méthacryliques, de l'anhydride maléïque.

Les réactions de fonctionnalisation selon le deuxième mode de réalisation de l'invention peuvent être réalisées en milieu fondu, ou en solution.

En pratique, et à titre d'exemple, une fonctionnalisation hydrophile peut être apportée par des radicaux polyoxyalkylènes provenant de polyoxyalkylènes aminés de type JEFFAMINE® . Ces fonctions sont avantageusement portées par les monomères (**III**) ou (**IV**).

On peut aussi utiliser des monomères comportant au moins une fonction sulfonate, soit aux extrémités des chaînes moléculaires, soit au sein des chaînes moléculaires. On cite à titre d'exemple de monomères l'acide sulfobenzoïque et le sulfinate de sodium correspondant, les sulfobenzylamines et le sulfinate de sodium correspondant, l'acide sulfoisophtalique ou le sulfinate de sodium correspondant.

Les nombreuses propriétés intéressantes des copolyamides hyperbranchés selon l'invention, leur ouvrent de multiples possibilités d'applications.

L'une des applications est l'utilisation comme agents modificateurs de rhéologie à l'état fondu, pour des polymères linéaires ou branchés, par exemple des polyamides. Le polyamide est avantageusement un polyamide du type de ceux obtenus par polymérisation des lactames, par exemple du polyamide 6.

Ainsi, les copolyamides hyperbranchés selon l'invention peuvent avoir un effet rhéoviscosant ou rhéofluidifiant sur des compositions polymères thermoplastiques. D'où il s'ensuit que selon une première utilisation, la présente invention a pour objet l'utilisation des copolyamides hyperbranchés tels que définis ci-dessus ou tels qu'obtenus par le procédé lui aussi présenté ci-avant, à titre d'agent modificateur de rhéologie à l'état fondu, pour des polymères linéaires ou branchés, de préférence des polyamides.

Suivant une disposition avantageuse de l'invention les (co)polyamides hyperbranchés sont des agents modificateurs de rhéologie à l'état fondu, plus spécifiquement appropriés pour des polyamides linéaires ou branchés.

Les copolyamides hyperbranchés selon l'invention permettent ainsi d'adapter la fluidité à l'état fondu de polymères thermoplastiques, aux contraintes imposées par les différentes techniques de mise en forme utilisées : moulage par injection, injection-soufflage, extrusion - soufflage, filage, fabrication de films, extrusion.

Sans que cela ne soit limitatif, on peut citer comme débouchés pour les polymères hyperbranchés rhéomodificateurs selon l'invention, les industries de Fabrication de fibres, de fils, de films, par exemple par extrusion et pièces moulées.

Une autre des applications importantes des copolyamides hyperbranchés selon l'invention est liée à leur. aptitude à modifier les propriétés thermomécaniques de polymères et, en particulier, de polymères thermoplastiques comme, par exemple, les polyamides, ou les polyesters.

Il se trouve en effet qu'incorporés dans les polymères thermoplastiques, les PAHB selon l'invention ont pour incidence de ralentir la cinétique de cristallisation des polymères thermoplastiques. Ce ralentissement peut être tel qu'il permet d'obtenir un produit amorphe qui pourra à nouveau être rendu cristallisable par traitement thermique. Ce frein à la cristallisation se traduit par une diminution de cristallinité, donc une augmentation de transparence, du polymère thermoplastique obtenu.

Un autre effet observé pour les copolyamides hyperbranchés selon l'invention lorsqu'ils sont incorporés dans des polymères thermoplastiques, est une augmentation de la température de transition vitreuse.

D'où il s'ensuit qu'une deuxième utilisation des copolyamides branchés tels que définis ci-dessus et/ou obtenus par le procédé également présenté ci-avant, et celle d'agent modificateur des propriétés thermomécaniques de matériaux polymères comprenant avantageusement des polyamides, et/ou des polyesters, de préférence du polyamide 6.

Ces propriétés des PAHB selon l'invention peuvent être exploités pour l'adaptation des polymères thermoplastiques aux différentes techniques de mise en forme : moulage par injection, injection soufflage, extrusion soufflage, filmage, extrusion, filage.

En particulier, cette exploitation peut être opportune pour la fabrication de fibres, de fils ou de films en polymères thermoplastiques, par exemple polyamides et/ou polyesters.

Dans le cadre d'autres utilisations des copolyamides hyperbranchés selon l'invention, on les envisage sous forme fonctionnalisée. Ces PAHB fonctionnalisés ont été décrits ci-dessus.

Les fonctionnalités qui peuvent être supportées par les PAHB selon l'invention, sont par exemple des radicaux fluorés, des chaînes grasses, des radicaux silicones, des radicaux à propriétés anti-UV, anti-oxydantes, tensioactives, adoucissantes, anti-salissures, stabilisantes, hydrophobes et/ou hydrophiles, ou des radicaux à propriétés d'encapsulation et/ou de vectorisation de principes actifs, par exemple de nature agrochimiques ou de colorants et/ou de pigments.

D'où il s'ensuit que l'invention concerne également l'utilisation du copolyamide hyperbranché et fonctionnalisé tel que défini ci-dessus et/ou obtenu par le procédé lui aussi présenté ci-avant, à titre d'additif dans des matériaux. Il peut en particulier être utilisé comme additif modificateur de l'hydrophilie / hydrophobie, de matériaux polymères comprenant, par exemple, des polyamides et/ou des polyesters.

L'invention concerne en particulier l'utilisation du copolyamide hyperbranché comme additif en mélange à un matériau thermoplastique, de préférence un polyester ou un polyamide, plus préférablement encore un polyamide 6, afin d'en améliorer l'hydrophilie et/ou l'antistaticité des fils, fibres ou filaments filés en fondu à partir du mélange. Ceci constitue une troisième utilisation particulière.

La quatrième utilisation des copolyamides hyperbranchés selon l'invention, découle, de la possibilité qui existe de fonctionnaliser ces polymères hyperbranchés, par exemple au "coeur" et/ou "en périphérie", par des fonctions spécifiques différentes de **A**, **B**, **A'**, **B'**. En effet, il s'est avéré que les polymères hyperbranchés selon l'invention judicieusement fonctionnalisés, ont un pouvoir de stabilisation de dispersions, de préférence aqueuses, de produits organiques et minéraux. Il peut s'agir en particulier de dispersions, de pigments tels que $TiO_2$. Pour pouvoir remplir cette fonction, il importe que les copolyamides hyperbranchés selon l'invention soient fonctionnalisés de telle sorte qu'ils soient solubles ou dispersables dans le milieu liquide de la dispersion et en particulier dans l'eau pour ce qui concerne les dispersions aqueuses.

L'utilisation des PAHB selon l'invention pour la stabilisation de pigments de type $TiO_2$ sera particulièrement appréciée dans le domaine des peintures formées par des dispersions aqueuses de tels pigments.

D'où il s'ensuit que l'invention concerne également l'utilisation du copolyamide hyperbranché fonctionnalisé tel que défini ci-dessus à titre de stabilisant de dispersion de préférence aqueuse de produits minéraux et/ou organiques.

Dans le cadre d'une cinquième utilisation, les copolyamides hyperbranchés selon l'invention, éventuellement fonctionnalisés, sont utilisés en tant qu'additif dans des matrices thermoplastiques, de préférence pour des mises en forme de fils, fibres ou filaments, afin d'en modifier les propriétés vis-à-vis des teintures et pigments. On préfère à cet effet utiliser des copolyamides hyperbranchés dont les fonctions terminales sont des fonctions de type aminés. On préfère tout particulièrement des fonctions terminales de types aminés portées par des radicaux aliphatiques. De tels composés peuvent être obtenus en utilisant un aminoacide, de préférence aliphatique, en tant que monomère (**II**), et un monomère (**I**) comprenant une fonction aminé et deux fonctions acides. Les fils, fibres et filaments base de polyester ou de polyamide, de préférence de polyamide 6, et comprenant un copolyamide hyperbranché tel que décrit ci-dessus présentent par exemple une affinité tinctoriale améliorée, et une persistance de la teinture au lavage améliorée. Pour ces applications on cite plus particulièrement les procédés de teinture en bain, avec des teintures acides.

On a observé que les copolyamides hyperbranchés selon l'invention, lorsqu'ils sont utilisés comme additifs à une matrice à base de polyamide, avaient tendance à migrer à la surface de ladite matrice. La concentration en copolyamide hyperbranché est plus importante en surface qu'au coeur du matériau mis en forme.

Une sixième utilisation consiste à utiliser les copolyamides hyperbranchés comme modificateurs de surface de matériaux thermoplastiques, de préférence des polyesters ou polyamide. Les compositions comprenant la matrice et les additifs à base de copolyamides hyperbranchés peuvent être mis en forme à partir de granulés par extrusion, soufflage, injection, injection gaz, moulage. Les articles ainsi obtenus peuvent présenter une meilleure peintabilité, une aptitude particulière à la métallisation, ou une interface permettant de les compatibiliser avec un milieu extérieur.

Selon un autre objet, l'invention vise des compositions à base polymérique comprenant au moins :

- une matrice polymère ;
- et au moins un additif comportant au moins un copolyamide hyperbranché tel que défini supra et/ou tel qu'obtenu par le procédé tel que défini supra.

La matrice polymère peut être choisie parmi les élastomères et les polymères thermoplastiques. On utilise avantageusement une matrice à base de polyamide, par exemple de polyamide 6 ou de polyamide 66. Les compositions peuvent de plus de plus comprendre des charges telles que des particules de silice, des fibres de verre, des charges minérales, par exemple un matifiant tel que le dioxyde de titane.

Avantageusement, la concentration de cet additif par rapport à la masse totale de la composition est comprise entre 0,001 et 70 %, de préférence entre 0,001 et 50 % et, plus préférentiellement entre 0,001 et 30 %.

Selon une modalité avantageuse, l'additif de la susdite composition polymère thermoplastique comprend du PAHB fonctionnalisé tel que défini ci-dessus.

Enfin, est également incluse dans l'invention, une dispersion ou une solution de préférence aqueuse qui est à mettre en relation avec la quatrième utilisation des PAHB selon l'invention et qui est caractérisée en ce qu'elle comprend :

- un milieu liquide, de préférence aqueux, de dispersion ou de solubilisation ;
- au moins un produit organique et/ou minéral dispersé ;
- et au moins un stabilisant comportant au moins un polyamide hyperbranché fonctionnalisé tels que définis supra.

Classiquement, les compositions polymères sus-visées additivées par les PAHB selon l'invention peuvent comporter également d'autres ingrédients choisis dans le groupe comprenant les charges de renfort, les charges de remplissage, les antioxydants, les stabilisants (chaleur/lumière), les pigments, les colorants, les ignifugeants, les additifs d'aide au moulage ou démoulage et les tensioactifs.

Suivant une autre caractéristique de l'invention, les compositions sus-visées sont obtenues par mélange par exemple dans une extrudeuse mono-vis ou bi-vis, d'une matrice polymère, de préférence thermoplastique, par exemple polyamide, linéaire ou branché, et d'un PAHB selon l'invention éventuellement complété par d'autres additifs classiques. Ce mélange est réalisé généralement à l'état fondu. Selon un mode de réalisation usuel, on extrude ce mélange sous forme de joncs qui sont ensuite découpés en granulés. Les pièces moulées sont ensuite réalisées par fusion des granulés produits ci-dessus et alimentation de la composition à l'état fondu dans des dispositifs de moulage, d'injection, d'extrusion ou filage appropriés.

Dans le cas de la fabrication de fils, fibres et filaments, la composition obtenue en sortie d'extrudeuse alimente éventuellement directement une installation de filage.

De préférence, on prépare ainsi une composition comprenant du polyamide linéaire à titre de matrice et un additif (0,01 à 70 % en poids sec) constitué par du polyamide hyperbranché selon l'invention.

Un dernier objet de la présente invention est constitué par les articles obtenus par mise en forme, de préférence, par moulage, moulage par injection, injection/soufflage, extrusion, extrusion/soufflage ou filage, de l'une des compositions polymères additivée PAHB telles que définies ci-dessus. De manière plus spécialement préférée, ces articles sont constitués par des fils, des fibres, des films, pièces soufflées ou moulées.

Les polymères hyperbranchés selon l'invention sont également avantageux en ce qu'ils sont utilisables comme promoteur d'adhésion, fixateur ou encapsulant de principes actifs (agrochimie), compatibilisant pour mélange de plusieurs polymères, supports de fonctionnalités de réticulation, de détergence, d'adoucissage, d'anti-salissures (hydrophobie/hydrophilie), d'anti-corrosion ou de lubrification.

D'autres détails et avantages de l'invention apparaîtront plus clairement au vu des exemples donnés ci-après uniquement à titre d'illustration.

## EXEMPLES

**Exemple 1 : synthèse d'un copolyamide hyperbranché à terminaisons acides carboxyliques par copolycondensation en phase fondue de l'acide 1,3,5-benzène tricarboxylique (molécule coeur de type $R^1$-B"$_3$, avec B" = COOH), de l'acide 5-aminoisophtalique (molécule de branchement de type A-R-B$_2$, avec A = NH$_2$ et B = COOH) et de l'ε-caprolactame (espaceur de type A'-R'-B' avec A' = NH2 et B' = COOH).**

La réaction est effectuée à pression atmosphérique dans une autoclave de 7,5 l utilisée couramment pour la synthèse en phase fondue de polyesters ou de polyamides.

Les monomères sont chargés intégralement en début d'essai. On introduit successivement dans le réacteur 1811,5 g d'acide 5-aminoisophtalique (10 mol), 84 g d'acide 1,3,5-benzène tricarboxylique (0,4 mol), 1131,6 g d'ε-caprolactame (10 mol) et 1,35 g d'une solution aqueuse à 50% (p/p) d'acide hypophosphoreux. Le réacteur est purgé par une succession de 4 séquences de mise sous vide et de rétablissement de la pression atmosphérique à l'aide d'azote sec.

La masse réactionnelle est chauffée progressivement de 20 à 200°C en 100 min., puis de 200 à 245°C en 60 min. Lorsque la température masse atteint 100°C, l'agitation est enclenchée avec une vitesse de rotation de 50 tours par minute. La distillation commence à une température masse de 160°C et se poursuit jusqu'à la température de 243°C. A 245°C, l'agitation est arrêtée et le réacteur est placé sous surpression d'azote. Ensuite, on ouvre progressivement la vanne de fond et le polymère est coulé dans un seau en inox rempli d'eau.

L'eau contenue dans les 221,06 g de distillat recueillis est titrée à l'aide d'un coulomètre Karl Fischer. La teneur en eau du distillât est de 81,1%, ce qui traduit un taux d'avancement global de 99,3%.

Le copolyamide hyperbranché obtenu est soluble à température ambiante dans la quantité de soude aqueuse nécessaire pour neutraliser les fonctions acides terminales.

**Exemple 2 : synthèse d'un copolyamide hyperbranché à terminaisons mixtes acides carboxyliques et polyoxydes d'alkylènes par copolycondensation en phase fondue de l'acide 5-aminoisophtalique (molécule de branchement de type A-R-B$_2$, avec A = NH$_2$ et B = COOH), de l'ε-caprolactame (espaceur de type A'-R'-B' avec A' = NH$_2$ et B' = COOH) et de la Jeffamine® M 1000 (polyoxyéthylène *co* oxypropylène aminé, molécule stoppeuse de chaîne de type $R^2$- A" avec A"=NH$^2$).**

Le montage et le mode opératoire mis en oeuvre sont sensiblement identiques à ceux décrit dans l'exemple 1.

Sont chargés successivement dans l'autoclave 2470,6 g de Jeffamine M 1000 (2,1 mol) ; 543,45 g d'acide 5-aminoisophtalique (3 mol) ; 339,5 g (3 mol) d' -caprolactame et 0,53 g d'une solution aqueuse à 50% (p/p) d'acide hypophosphoreux. Le réacteur est purgé par une succession de 4 séquences de mise sous vide et de rétablissement de la pression atmosphérique à l'aide d'azote sec.

Par rapport à l'exemple 1, la vitesse d'agitation est portée à 100 rpm et la température de fin de polycondensation à 260°C. Le polymère est expulsé par la vanne de fond après refroidissement à 120°C.

Le polymère obtenu est soluble dans l'eau.

**Exemple 3 : synthèse d'un copolyamide hyperbranché à terminaisons aminés par copolycondensation en phase fondue de la Jeffamine® T 403 (molécule coeur de type $R^1$-B"$_3$, avec B" = NH$_2$), de l'acide 3,5-diaminobenzoïque (molécule de branchement de type A-R-B$_2$, avec A = COOH et B=NH$_2$) et de l'ε-caprolactame (espaceur de type A'-R'-B' avec B' = NH$_2$ et A' = COOH).**

La réaction est effectuée à pression atmosphérique et sous léger balayage d'azote dans une autoclave de 1 l utilisée couramment pour la synthèse en phase fondue de polyesters ou de polyamides.

Les monomères sont chargés intégralement en début d'essai. On introduit successivement dans le réacteur 322,5 g d'acide 3,5-diaminobenzoïque (2,12 mol), 239,9 g d'ε-caprolactame (2,12 mol), 37,3 g de Jeffamine® T 403 (0,085mole), 4 g de 5-tert-Butyl-4-hydroxy-2-méthylphényl sulfure (Ultranox® 236) et 1,1 ml d'une solution aqueuse à 50% (p/p) d'acide hypophosphoreux. Le réacteur est purgé par une succession de 4 séquences de mise sous vide et de rétablissement de la pression atmosphérique à l'aide d'azote sec.

La masse réactionnelle est chauffée progressivement de 20 à 200°C en 100 min., puis de 200 à 230°C en 60 min, et enfin en palier à 230°C pendant 180 min. Lorsque la température de masse atteint 100°C, l'agitation est enclenchée avec une vitesse de rotation de 50 tours par minute. La distillation commence à une température masse de 215°C. Après 180 min. à 230°C, l'agitation est arrêtée et le réacteur est placé sous surpression d'azote. Ensuite, on ouvre progressivement la vanne de fond et le polymère est coulé dans un seau en inox rempli d'eau.

**Exemple 4 : synthèse d'un copolyamide hyperbranché à terminaisons aminés par copolycondensation en phase fondue de la L-lysine (molécule de branchement de type A-R-B$_2$, avec A = COOH et B = NH$_2$) et de l'ε-caprolactame (espaceur de type A'-R'-B' avec B' = NH$_2$ et A' = COOH).**

Le montage et le mode opératoire mis en oeuvre sont sensiblement identiques à ceux décrit dans l'exemple 3.

Sont chargés successivement dans l'autoclave 337,7 g (2,31 mol) de L-lysine ; 261,4 g (2,31 mol) d'ε-caprolactame ; 0,83 g de 5-tert-Butyl-4-hydroxy-2-méthylphényl sulfure (Ultranox® 236) et 600 l d'une solution aqueuse à 50% (p/p) d'acide hypophosphoreux. Le réacteur est purgé par une succession de 4 séquences de mise sous vide et de rétablissement de la pression atmosphérique à l'aide d'azote sec.

La masse réactionnelle est chauffée progressivement de 20 à 120°C en 100 min., puis de 120 à 200°C en 100 min, et enfin en palier à 200°C pendant 60 min. Lorsque la température masse atteint 80°C, l'agitation est enclenchée avec une vitesse de rotation de 50 tours par minute. La distillation commence à une température masse de 160°C. Après 60 min. à 200°C, l'agitation est arrêtée et le réacteur est placé sous surpression d'azote. Ensuite, on ouvre progressivement la vanne de fond et le réacteur est vidangé.

**Exemple 5: synthèse d'un copolyamide hyperbranché à terminaisons acides carboxyliques par copolycondensation en phase fondue de l'acide 1,3,5-benzène tricarboxylique (molécule coeur de type R$^1$-B''$_3$, avec B'' = COOH), de l'acide 5-aminoisophtalique (molécule de branchement de type A-R-B$_2$, avec A = NH$_2$ et B = COOH), de l'ε-caprolactame et de l'acide m-aminobenzoïque (espaceurs de type A'-R''-B- avec A' = NH$_2$ et B' = COOH).**

Le montage et le mode opératoire mis en oeuvre sont sensiblement identiques à ceux décrit dans l'exemple 3.

Les monomères sont chargés intégralement en début d'essai. On introduit successivement dans le réacteur 130,4 g d'acide 5-aminoisophtalique (0,72 mol) ; 9,2 g (0,044 mol) d'acide 1,3,5-benzène tricarboxylique ; 163 g (1,44 mol) d'ε-caprolactame ; 197,5 g (1,44 mol) d'acide m-aminobenzoïque et 190 l d'une solution aqueuse à 50% (p/p) d'acide hypophosphoreux. Le réacteur est purgé par une succession de 4 séquences de mise sous vide et de rétablissement de la pression atmosphérique à l'aide d'azote sec.

La masse réactionnelle est chauffée progressivement de 20 à 200°C en 100 min., puis de 200 à 242°C en 60 min, et enfin en palier à 242°C pendant 10 min. Lorsque la température masse atteint 90°C, l'agitation est enclenchée avec une vitesse de rotation de 50 tours par minute. La distillation commence à une température masse de 208°C. Après 10 min. à 242°C, l'agitation est arrêtée et le réacteur est placé sous surpression d'azote. Ensuite, on ouvre progressivement la vanne de fond et le polymère est coulé dans un seau en inox rempli d'eau.

**Exemple 6 : synthèse d'un copolyamide hyperbranché à terminaisons aminés et à fonctionnalité focale polyoxyde d'alkylène par copolycondensation en phase fondue de la Jeffamine® M 1000 (molécule stoppeuse de chaine de type R$^2$-A'', avec A'' = NH$_2$), de l'acide 3,5-diaminobenzoïque (molécule de branchement de type A-R-B$_2$, avec A = COOH et B = NH$_2$) et de l'ε-caprolactame (espaceur de type A'-R''-B' avec B' = NH$_2$ et A' = COOH).**

La réaction est effectuée à pression atmosphérique et sous léger balayage d'azote dans un système de laboratoire constitué d'un réacteur inférieur en verre de 300 ml chauffé au moyen d'un bain d'alliage métallique de Wood et d'un réacteur supérieur double - enveloppe de 100 ml chauffé par circulation d'huile.

Dans le réacteur inférieur sont chargés 96,85 g (0,087 mole) de Jeffamine® M 1000 ; 0,13 g de 5-tert-Butyl-4-hydroxy-2-méthylphényl sulfure (Ultranox® 236) et 170 d'une solution aqueuse à 50% (p/p) d'acide hypophosphoreux.

Dans le réacteur supérieur sont chargés 48,76 g (0,32 mol) d'acide 3,5-diaminobenzoïque et 54,39 g (0,48 mol), d'ε-caprolactame.

Le système complet est purgé par. une succession de 4 séquences de mise sous vide et de rétablissement de la pression atmosphérique à l'aide d'azote sec.

Le réacteur inférieur est chauffé à 230°C et placé sous agitation (vitesse = 150 tours/min.). Le réacteur supérieur est porté à 120°C et placé sous agitation (vitesse = 50 tours / min.). L'acide 3,5-diaminobenzoïque se solubilise alors dans l'ε-caprolactame fondu. Cette solution est coulée par gravité dans le réacteur inférieur sur une période de 5 heures. La distillation se produit de façon concomitante. Une fois la coulée terminée, le réacteur inférieur est maintenu sous agitation à 230°C pendant 1 h 30. La masse réactionnelle est ensuite refroidie et le polymère récupéré par ouverture du montage.

**Exemple 7 : synthèse d'un copolyamide hyperbranché à terminaisons maléimides par réaction de l'anhydride maléique sur un copolyamide hyperbranché à terminaisons aminés.**

La réaction est effectuée sous ciel d'azote dans un ballon tricol équipé d'une ampoule de coulée, d'un réfrigérant et d'une agitation mécanique.

7,84 g d'anhydride maléique sont dissous dans 40 ml de N,N-diméthylformamide et introduits dans l'ampoule de coulée. 10 g de copolyamide hyperbranché à terminaisons aminés tel que décrit dans l'exemple 3 sont dissous dans 90 ml de N,N-diméthylformamide. Le contenu de l'ampoule de coulée est additionné à température ambiante sur une période de 60 min. Le masse réactionnelle est ensuite maintenue sous agitation à température ambiante pendant 4 heures. On additionne ensuite 24 ml d'anhydride acétique et 2,1 g d'acétate de sodium et le ballon est porté à 90°C. Au bout de 30 min. à 90°C, la masse réactionnelle gélifie. Le chauffage est maintenu pendant 120 min. supplémentaires, puis le contenu du ballon est versé sur de la glace pilée. On isole par filtration un solide marron, qui est lavé avec une solution de bicarbonate de sodium à 5% p/p, puis avec de l'eau, puis avec du méthanol. Le produit final est séché à 60°C sous le vide d'une pompe à palettes.

La caractérisation en spectrophotométrie infrarouge à transformée de Fourier montre la présence de bandes caractéristiques d'imides et la disparition des bandes d'aminés initialement présentées par le copolyamide hyperbranché avant modification.

**Exemple 8 : synthèse d'un copolyamide hyperbranché à terminaisons ammoniums quaternaires et à fonctionnalité focale polyoxyde d'alkylène par modification des extrémités d'un copolyamide hyperbranché à terminaisons aminés et à fonctionnalité focale polyoxyde d'alkylène.**

La réaction est effectuée sous ciel d'azote dans un réacteur de laboratoire en verre équipé d'une agitation mécanique.

32,39 g d'une solution aqueuse à 70% p/p de chlorure d'époxypropyltriméthylammonium (QUAB® 151), 30 g de copolyamide hyperbranché tel que décrit dans l'exemple 6 et 20 ml d'eau déminéralisée sont introduits dans le réacteur. Le mélange est placé sous agitation et chauffé à 70°C pendant 24 heures.

La masse réactionnelle est ensuite diluée par 30 ml d'eau déminéralisée et transférée dans une ampoule à décanter. On procède à 4 extractions liquide / liquide avec des fractions de 50 ml d'éther éthylique. La phase aqueuse est transvasée dans un ballon à fond rond et séchée sous vide à l'évaporateur rotatif.

**Exemple 9 : Influence du rapport A-R-B$_2$ / A'-R'-B' et de la nature des groupements terminaux sur les propriétés des polyamides hyperbranchés.**

Différents polymères hyperbranchés sont synthétisés selon les protocoles décrits dans les exemples 1 et 3. Dans tous les cas, le monomère A'-R'-B' est l'ε-caprolactame.

Les températures de transition vitreuse sont mesurées par analyse calorimétrique différentielle.

L'évaluation de la solubilité est faite à 10% (p/p) dans le solvant choisi.

Les résultats sont rassemblés dans le tableau ci-après.

## Tableau I

| A-R'-B$_2$ / A-R''-B (mol/mol) | groupements terminaux COOH A-R-B$_2$ = acide 5-aminoisophtalique | | groupements terminaux NH$_2$ A-R-B$_2$ = acide 3,5-diaminobenzoïque | |
|---|---|---|---|---|
| | Tg | solvants | Tg | solvants |
| 1/1 | 183,7°C | DMAc, NMP, NaOH 1N | 154,9°C | DMAc, NMP, HCl 1N |
| 1/2 | 116°C | DMAc, NMP, NaOH 1N | nd | nd |
| 1/3 | 96,5°C | DMAc, NMP | nd | nd |
| 1/4 | 81,2°C | DMAc + 5% LiCl (p/p) | 82,4°C | DMAc + 5% LiCl (p/p) |

Abréviations : DMAc = N,N-diméthylacétamide ; NMP = N-méthylpyrrolidone ; nd = non déterminé

**Exemple 10 : Préparation de mélanges copolyamide hyperbranché (A-R-B$_2$/A'-R'-B' = 1/1) + poly($\varepsilon$-caprolactame) (PA 6) + fibres de verre.**

Le copolyamide hyperbranché de l'exemple 1 (noté PAHB① ) est grossièrement broyé et prémélangé dans les proportions désirées à des granulés de poly($\varepsilon$-caprolactame) (PA 6). Des compositions contenant 50 % en poids de fibres de verre et une matrice PA 6 additivée par des quantités variables de copolyamide hyperbranché sont réalisées par mélange à l'état fondu à une température de 250°C en extrudeuse bi-vis.
Les propriétés de ces compositions sont rassemblées dans le tableau II ci-après.

Tableau II

| Matrice | Choc Izod entaillé (kJ/m$^2$) | Module de traction (N/mm$^2$) | Contrainte rupture (N/mm$^2$) | MFI (1) 275°C 325g (g/10min.) | Test spirale (2) (cm) |
|---|---|---|---|---|---|
| PA 6 | 18,8 | 14335 | 217,2 | 1,3 | 26,5 |
| PA 6 / PAHB① 95/5 (p/p) | 16,1 | 13361 | 221,5 | 2,2 | 41 |
| PA 6 / PAHB① 90/10 (p/p) | 14,8 | 14624 | 240,4 | 5,7 | 39 |

Tableau II (suite)

| Matrice | Choc Izod entaillé (kJ/m$^2$) | Module de traction (N/mm$^2$) | Contrainte rupture (N/mm$^2$) | MFI (1) 275°C 325g (g/10min.) | Test spirale (2) (cm) |
|---|---|---|---|---|---|
| PA 6 / PAHB① 80/20 (p/p) | 15,2 | nd | nd | 13,6 | 62,3 |

(1) Indice de fluidité (MFI) déterminé selon la norme ASTM D1238

(2) Ce test consiste à injecter la composition dans un moule en forme de spirale d'épaisseur 1mm et de largeur 40 mm sous une presse BATTENFELD de 180 tonnes à une température de 270°C, une température de moule de 80°C et une pression d'injection de 80 kg/cm$^2$. La durée d'injection est de 1,5 secondes. Le résultat est exprimé en longueur de moule remplie correctement par la composition.

Ces résultats montrent clairement que pour des compositions additivées avec le copolyamide hyperbranché PAHB① , l'indice de fluidité en milieu fondu augmente considérablement sans altération sensible des propriétés mécaniques.

**Exemple 11 : Préparation de mélanges copolyamide hyperbranché + poly($\epsilon$-caprolactame) (PA 6) en faisant varier le rapport A-R-B$_2$ / A'-R'-B' pour le copolyamide hyperbranché.**

Les conditions de mélange sont identiques à celles de l'exemple 10. Les compositions sont exemptes de fibres de verre.

Les copolyamides hyperbranchés considérés ici diffèrent par leur rapport A-R-B$_2$ / A'-R'-B'. Ils sont tous deux obtenus à partir d'acide 5-aminoisophtalique, d'acide 1,3,5-benzène tricarboxylique et d'$\epsilon$-caprolactame selon un protocole similaire à celui de l'exemple 1.

La viscosité fondue des mélanges est mesurée à l'aide d'un rhéomètre capillaire GOTTFERT 2002 : un piston se déplaçant à vitesse variable pousse le produit fondu à une température de 260°C à travers un capillaire de longueur L = 30 mm et de rayon R = 1 mm. Le débit correspondant est noté Q. On mesure la pression P à l'entrée du capillaire. Les relations permettant de calculer la viscosité apparente sont :

contrainte apparente à la paroi : $\tau_a = R.P / 2L$
gradient de cisaillement apparent à la paroi : $\gamma_a = 4Q /\pi^3$
viscosité apparente à la paroi : $\eta_a = \tau_a / \gamma_a$

Les échantillons sont séchés 16 heures à 110°C sous un vide de 0,1 mbar avant évaluation. Le temps de fusion du polymère avant mesure est de 5 min. La mesure est effectuée sous atmosphère d'argon.

Les résultats des mesures de rhéométrie capillaire pour un gradient de cisaillement de 50 s-1 sont rassemblés dans le tableau III ci-après.

Tableau III

| Composition | Viscosité apparente à 50 s$^{-1}$ (en Pa.s) |
|---|---|
| PA 6 | 290 |
| PA 6 / PAHB (A-R-B$_2$/A'-R'-B' = 1/1) 90/10 (p/p) | 97 |
| PA 6 / PAHB (A-R-B$_2$ / A'-R'-B- = 1/4) 90/10 (p/p) | 409 |

Ces résultats montrent clairement que le copolyamide hyperbranché peut avoir un effet rhéofluidifiant ou au contraire rhéoviscosant sur la composition selon le rapport A-R-B$_2$ / A-R'-B.

**Exemple 12 : Etude du comportement thermomécanique de mélanges copolyamide hyperbranché + PA 6.**

Les compositions de l'exemple 11 sont injectées sous forme de barreaux rectangulaires. Ces éprouvettes sont séchées 16 heures à 110°C sous un vide de 0,1 mbar avant évaluation. L'étude du comportement thermomécanique des matériaux est effectuée sur un appareil RHEOMETRICS RMS 800 en torsion rectangulaire, sur l'intervalle de température [- 100°C ; + 200°C].

Les résultats sont rassemblés dans le tableau IV ci-après.

Tableau IV

| Composition | Module élastique à 23°C (MPa) | température de transition vitreuse (°C) |
|---|---|---|
| PA6 | 1004 | 69,1 |
| PA 6 / PAHB (A-R-B$_2$ / A'-R'-B' =1/1) 90/10 (p/p) | 1038 | 87,1 |
| PA 6 / PAHB (A-R-B$_2$ / A'-R'-B' = 1/4) 90/10 (p/p) | 1004 | 73,4 |

Ces résultats montrent que l'addition de copolyamide hyperbranché augmente nettement la température de transition vitreuse de la matrice PA 6.

**Exemple 13 : Influence de l'introduction de copolyamide hyperbranché sur la cristallisation du PA 6.**

Des mélanges similaires à ceux de l'exemple 11, mais contenant 5% en poids de copolyamide hyperbranché, sont étudiés en analyse calorimétrique différentielle à l'aide d'un appareil PERKIN ELMER DSC PYRIS 1. Le protocole d'analyse est le suivant :

- étape 1 : chauffe de 30°C à 310°C à 10°C/min.
- étape 2 : palier de 5 min. à 310°C
- étape 3 : retrait de l'échantillon du four du calorimètre et trempe immédiate dans l'azote liquide
- étape 4 : stabilisation du four à 30°C
- étape 5 : remise en place de la capsule et remontée en température de 30 à 310°C à 10°C/min

Les différents paramètres mesurés au cours de l'étape 5 sont regroupés dans le tableau V ci-après et les thermogrammes comparés enregistrés entre 50 et 300°C au cours de l'étape 5 sont donnés en figure I.

Tableau V

| Composition | Température de cristallisation (°C) | Enthalpie de cristallisation (J/g) | Température de fusion (°C) | Enthalpie de fusion (J/g) |
|---|---|---|---|---|
| PA 6 | 66,2 | -7,5 | 221,8 | 68,2 |
| PA / PAHB (A-R-B$_2$ / A'-R'-B' = 1/1) 95/5 (p/p) | 74,5 | -28,9 | 218,0 | 61,1 |
| PA / PAHB (A-R-B$_2$ / A'-R'-B' = 1/4) 95/5 (p/p) | 70,3 | -28,5 | 219,3 | 61,1 |

L'échantillon de PA 6 témoin présente un très petit pic de cristallisation à la remontée en température. Il a eu le temps de cristalliser presque totalement malgré le refroidissement rapide dans l'azote liquide. Par contre, les produits contenant du copolyamide hyperbranché donnent tous deux un pic de cristallisation important, qui représente en surface la moitié du pic de fusion. Leur taux de cristallinité après trempe est donc considérablement diminué par rapport à celui de l'échantillon témoin.

Ces résultats montrent que le copolyamide hyperbranché agit comme un agent retardant la cristallisation de la matrice PA 6. L'additif hyperbranché permet ainsi d'obtenir des matrices PA 6 faiblement cristallisées, dont la cristallinité peut être régénérée par chauffage. La diminution de cristallinité se traduit par une plus grande transparence des pièces moulées ou des fils extrudés à partir des compositions contenant le copolyamide hyperbranché.

**Exemple 14 : Ségrégation de surface des copolyamides hyperbranchés dans les mélanges copolyamide hyperbranché + poly($\varepsilon$-caprolactame) (PA 6).**

La composition de l'exemple 11 contenant 10% p/p de copolyamide hyperbranché issu de l'exemple 1 et 90% p/p de PA 6 est injectée sous forme d'éprouvettes haltères. Des coupes transversales de ces éprouvettes d'environ 10 μm d'épaisseur sont réalisées à l'aide d'un ultra microtome et observées en microscopie optique avec excitation UV et filtre d'arrêt dans le bleu. On observe que l'ensemble de la section de l'échantillon est fluorescente, avec une zone plus intense au bord, sur une épaisseur d'environ 25 µm (voir figure V).

Cette observation montre que la concentration en polymère hyperbranché est plus élevée à la surface de l'éprouvette qu'en son coeur. Dans les conditions de mise en forme, l'additif hyperbranché initialement mélangé de façon homogène à la matrice PA 6 a donc tendance à migrer à la surface de l'échantillon.

**Exemple 15 :Préparation et évaluation de fils à partir de compositions polymères comprenant une matrice polyamide (PA6) et du PAHB selon l'invention a titre d'additif**

***15.A. Compositions utilisées***

(i) Essais 15.1. 15.2 comparatifs

| essai | Matrice | Indice Viscosité IV | PAHB |
|-------|---------|---------------------|------|
| 15.1 | PA 6 | 130 | exemple 9 avec (I)/(II) = 1/1 |
| 15.2 | PA 6 | 150 | exemple 9 avec (I)/(II) = 1/1 |

La matrice PA.6 est un polymère commercialisé par la société NYLTECH sous la dénomination SNIAMID 130CP®.

(ii) Essais 15.3 à 15.6 avec des compositions comprenant 95 ou 98 % en poids d'une matrice de PA.6, dont l'IV = 150, commercialisé par la société NYLTECH sous la référence SNIAMID 150 CP® et 5 ou 2 % en poids des PAHB de l'exemple 9 avec (I)/(II) =1/1.

| Essai | [PAHB] (%) | terminaison | (I)/(II) |
|-------|-----------|-------------|----------|
| 15.3 | 2 | COOH | 1/1 |
| 15.4 | 2 | $NH_2$ | 1/1 |
| 15.5 | 5 | COOH | 1/1 |
| 15.6 | 5 | $NH_2$ | 1/1 |

***15.B Fabrication de fils non étirés à partir de ces compositions***

Les fils non étirés ont été obtenus par filage voie fondu à basse vitesse et refroidissement à l'air. Dans la zone de fusion, la température de filage est comprise entre 235° C et 245° C.

Aucune différence significative de comportement au filage n'est mise en évidence entre les compositions comparatives 15.1, 15.2 et celles contenant un PAHB (15.3 à 15.6).

Après filage, on obtient des bobines de monofilament non étirés de diamètre 250µm.

***15.C Fabrication de fils étirés à partir des fils non-étires 15.1 à 15.6 obtenus en 15.B***

Les fils obtenus en 15.B sont ensuite étirés en reprise sur un banc spécifique d'étirage entre deux rouleaux, la température du fil avant étirage étant contrôle par la température du premier rouleau. La température du second rouleau étant de 25°C.

L'étirage peut être réalisé dans un large domaine de température, entre 77°C et 155°C.

On a reporté dans le tableau VI suivant les conditions opératoires associées aux différents fils étirés. Pour chaque type de fil non étiré, on indique la température T (°C) à laquelle est imposée l'étirage ainsi que le taux d'étirage effectivement appliqué (rapport vitesse second rouleau / vitesse premier rouleau):

Tableau VI

| fil non étiré | T(°C) | λ | référence |
|---|---|---|---|
| essai 15.1 | 77 | 4.23 | 8.11 |
| essai 15.1 | " | 4.76 | 8.12 |
| essai 15.1 | 103 | 4.49 | 8.13 |
| essai 15.1 | " | 5.08 | 8.14 |
| essai 15.1 | 116 | 3.93 | 8.15 |
| essai 15.1 | " | 4.41 | 8.16 |
| essai 15.2 | 131 | 4.93 | 8.21 |
| essai 15.2 | 143 | 4.56 | 8.22 |
| essai 15.2 | " | 4.75 | 8.23 |
| essai 15.3 | 77 | 4.06 | 8.31 |
| essai 15.3 | " | 4.38 | 8.32 |
| essai 15.3 | 116 | 4.96 | 8.33 |
| essai 15.3 | 143 | 4.85 | 8.34 |
| essai 15.3 | " | 5.14 | 8.35 |
| essai 15.3 | 155 | 3.70 | 8.36 |
| essai 15.3 | " | 4.00 | 8.37 |
| essai 15.4 | 77 | 4.56 | 8.40 |
| essai 15.4 | " | 4.91 | 8.41 |
| essai 15.4 | 116 | 4.71 | 8.42 |
| essai 15.4 | " | 5.06 | 8.43 |
| essai 15.4 | 145 | 4.38 | 8.44 |
| essai 15.4 | " | 4.78 | 8.45 |
| essai 15.4 | " | 5.21 | 8.46 |
| essai 15.4 | 155 | 4.37 | 8.47 |
| essai 15.4 | " | 4.72 | 8.48 |
| essai 15.4 | " | 4.99 | 8.49 |
| essai 15.5 | 117 | 4.08 | 8.51 |
| essai 15.5 | " | 4.42 | 8.52 |
| essai 15.5 | " | 4.72 | 8.53 |
| essai 15.5 | 143 | 3.79 | 8.54 |
| essai 15.5 | " | 4.17 | 8.55 |
| essai 15.5 | " | 4.54 | 8.56 |
| essai 15.6 | 117 | 4.39 | 8.61 |
| essai 15.6 | " | 4.75 | 8.62 |
| essai 15.6 | " | 4.92 | 8.63 |
| essai 15.6 | 143 | 4.25 | 8.64 |
| essai 15.6 | " | 4.62 | 8.65 |
| essai 15.6 | " | 4.94 | 8.66 |

Après étirage, on obtient des monofilaments de diamètre 100 à 120µm selon la valeur du taux d'étirage appliqué.

On ne note aucune différence particulière en termes d'aptitude à l'étirage entre les compositions comparatives des essais 15.1, 15.2 (PA6) et celles de la présente invention contenant une fraction de 2 ou 5 % de polyamide hyperbranché.

En particulier, les taux maximum accessibles d'étirage restent comparables (entre 5,2 et 5,9 selon les températures).

De même, des taux d'étirage comparables peuvent être appliqués sur ces différentes compositions : 3,7 à 5,2 selon la valeur de l'allongement à la rupture final souhaité.

### 15.D. Caractérisation de ces fils étirés

Ces fils étirés sont ensuite caractérisés en termes de propriétés mécaniques sur une machine de traction usuelle de marque ERICHSEN.

Les conditions de mesure sont alors :

- longueur initiale de l'éprouvette entre les mors = 50mm,
- mors pneumatiques,
- vitesse de déplacement des mors = 50mm/min
- mesure dans une salle climatisée à 23°C et 50%HR avec conditionnement préalable des fils étirés pendant 48 h avant analyse.
- mesure de la contrainte à la rupture par division de la force de rupture (N) par la section initiale (mm$^2$),
- mesure du module sécant à 5% d'allongement,
- moyenne des données sur 6 à 12 éprouvettes.

| Tableaux VII des résultats : | | | |
|---|---|---|---|
| Fil étiré | $\sigma_r$ (MPa) | $\varepsilon_r$ (%) | E (GPa) |
| 15.11 | 845 | 16.9 | 3.877 |
| 15.12 | 761 | 20.0 | 3.859 |
| 15.13 | 695 | 22.5 | 3.373 |
| 15.14 | 936 | 19.5 | 4.267 |
| 15.15 | 578 | 28.8 | 2.844 |
| 15.16 | 535 | 31.8 | 2.518 |
| 15.21 | 804 | 20.3 | 3.752 |
| 15.22 | 607 | 30.6 | 2.841 |
| 15.23 | 867 | 21.7 | 3.881 |
| 15.31 | 521 | 33.5 | 3.021 |
| 15.32 | 592 | 23.8 | 3.411 |
| 15.33 | 768 | 22.1 | 3.680 |
| 15.34 | 660 | 24.3 | 3.478 |
| 15.35 | 733 | 20.7 | 3.783 |
| 15.36 | 502 | 34.2 | 3.421 |
| 15.37 | 596 | 26.6 | 3.838 |
| 15.40 | 612 | 32.1 | 3.149 |
| 15.41 | 679 | 25.9 | 3.167 |
| 15.42 | 725 | 30.1 | 3.685 |
| 15.43 | 800 | 23.8 | 3.942 |
| 15.44 | 617 | 33.7 | 3.668 |
| 15.45 | 692 | 27.0 | 4.015 |
| 15.46 | 872 | 19.2 | 4.519 |
| 15.47 | 645 | 24.7 | 4.180 |
| 15.48 | 651 | 26.7 | 3.897 |
| 15.49 | 820 | 21.5 | 4.773 |
| 15.51 | 557 | 27.6 | 4.358 |
| 15.52 | 614 | 24.9 | 4.568 |
| 15.53 | 740 | 22.7 | 5.447 |
| 15.54 | 507 | 24.6 | 4.417 |
| 15.55 | 510 | 33.8 | 4.029 |
| 15.56 | 660 | 22.4 | 5.189 |
| 15.61 | 654 | 29.1 | 4.956 |
| 15.62 | 586 | 26.5 | 4.488 |

(suite)

| Tableaux VII des résultats : | | | |
|---|---|---|---|
| **Fil étiré** | **$\sigma_r$ (MPa)** | **$\varepsilon_r$ (%)** | **E (GPa)** |
| 15.63 | 808 | 22.0 | 5.647 |
| 15.64 | 552 | 34.2 | 4.228 |
| 15.65 | 749 | 23.8 | 5.562 |
| 15.66 | 907 | 24.9 | 6.439 |
| $\sigma_r$ : force de contrainte à la rupture $\varepsilon_r$ : allongement à la rupture E : module | | | |

On a également reporté sur les trois figures 2, 3, 4 annexées les données correspondantes :

- figure 2 : module en fonction de la contrainte à la rupture E = f ($\sigma_r$),
- figure 3 : contrainte rupture en fonction de l'allongement à la rupture ($\sigma_r$) = f($\varepsilon_r$),
- figure 4 : module en fonction de l'allongement à la rupture E = f($\varepsilon_r$),

La légende de ces figures est la suivante :

+ PA6 pur (essais 8.11 à 8.16 et 8.21 à 8.23)
$\Delta$ PA6 avec 2 % de PA HB-COOH (essais 8.31 à 8.37)
$\lozenge$ PA6 avec 2 % de PA HB-NH$_2$ (essais 8.40 à 8.49)
$\square$ PA6 avec 5 % de PA HB-COOH (essais 8.51 à 8.56)
$\blacklozenge$ PA6 avec 5 % de PA HB-NH$_2$ (essais 8.61 à 8.66)
PA HB = polyamide hyperbranché avec un rapport 1/1 = (I) / (II).

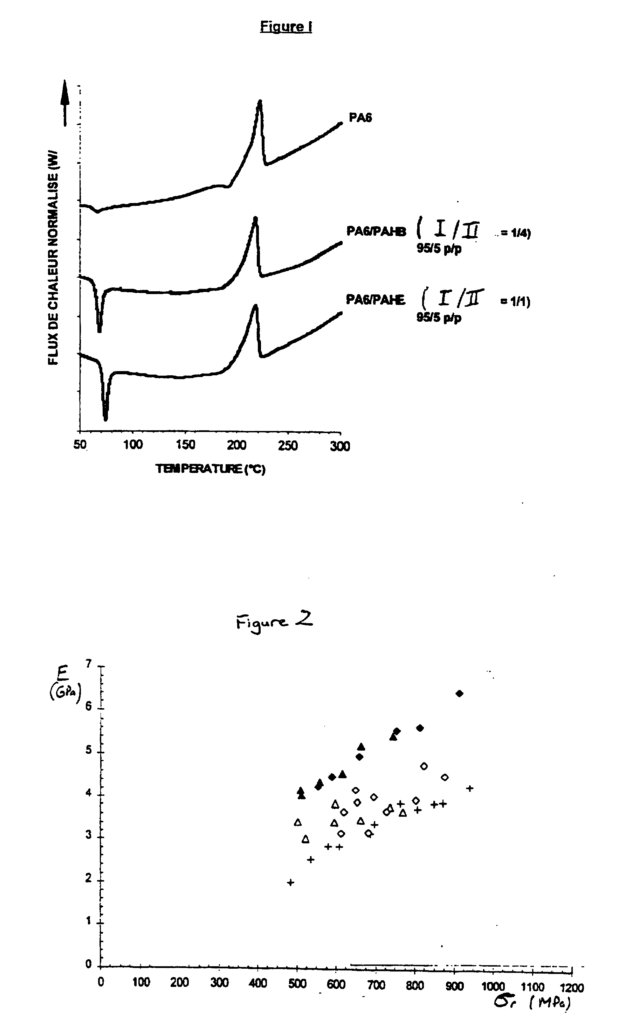

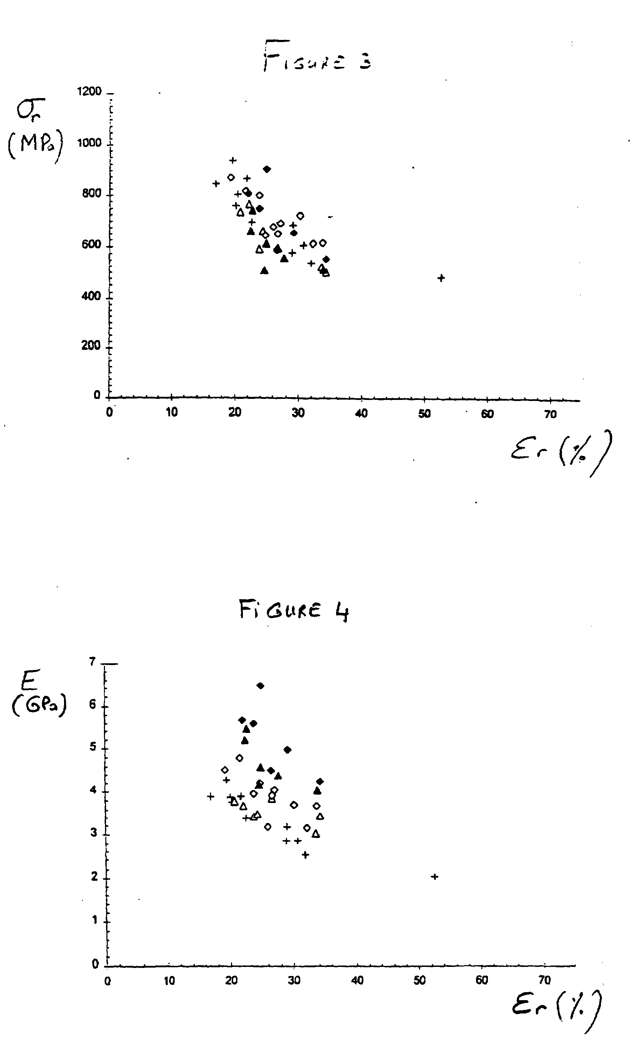

Le fait marquant des produits obtenus dans le cadre de cette invention est qu'ils permettent de générer des compromis différents de ceux accessibles avec le seul PA6.
D'après les courbes des **Figures 2** à **4**, les résultats montrent que le compromis entre l'allongement à la rupture et la force de contrainte à la rupture est différent pour les compositions conformes à l'invention et contenant avec du polyamide 6 un polyamide hyperbranché.
Ainsi, il apparaît clairement que le compromis contrainte/allongement à la rupture peut être conservé tout en augmentant significativement la valeur du module.

### Exemple 16:

On réalise une composition comprenant 98 parts en poids de polyamide 6 et 2 parts en poids d'un copolyamide hyperbranché (PAMB) selon l'exemple 4, à l'aide d'un dispositif d'extrusion double vis. La composition est mise en forme de granulés en sortie d'extrudeuse (PA6 + PAMB).
On immerge les granulés dans un bain de teinture de caractéristiques suivantes :

- teinture : Bleu polaire Rawl 150 %
- concentration : 1 %
- rapport du bain : 1/50
- pH 6.

La température du bain est élevée à 98°C à une vitesse de 1°C par minute, puis le bain est maintenu à 98°C pendant 30 minutes. La température du bain est ensuite abaissée à la vitesse de 2°C par minute.
On réalise une expérience similaire pour un polyamide 6 ne comprenant pas le copolyamide hyperbranché (PA6).
Par dosage colorimétrique du bain avant et après teinture, on mesure la perte en teinture du bain.
On mesure également la concentration en groupement terminaux aminés dans les granulés avant teinture. Les résultats sont reportés dans le tableau VIII.

# EP 1 183 301 B1

Tableau VIII

|  | PA6 + PAHB | PA6 |
|---|---|---|
| Groupements terminaux aminés | 126 mg/kg | 42 mglkg |
| Perte en teinture | 95 % | 44 % |

**Revendications**

1. Copolyamide hyperbranché du type de ceux obtenus par réaction entre :

   - au moins un monomère de formule (I) suivante :

   $$(I) \qquad \mathbf{A}\text{-R-}\mathbf{B}_f$$

   dans laquelle **A** est une fonction réactive de polymérisation d'un premier type, **B** est une fonction réactive de polymérisation d'un second type et capable de réagir avec **A**, R est une entité hydrocarbonée comportant éventuellement des hétéroatomes, et f est le nombre total de fonctions réactives **B** par monomère : $f \geq 2$, de préférence $2 \leq f \leq 10$ ;
   - et au moins un monomère bifonctionnel de formule (**II**) suivante :

   $$(II) \qquad \mathbf{A'}\text{-R'-}\mathbf{B'} \text{ ou les lactames correspondants,}$$

   dans laquelle **A'**, **B'**, **R'** ont la même définition que celle donnée ci-dessus respectivement pour **A**, **B**, **R** dans la formule (**I**) : avec

   en ce que,

   - **A**, **A'** est une fonction réactive du type aminé, sel d'aminé ou du type acide, ester, halogénure d'acide ou amide ;
   - **B**, **B'** est une fonction réactive du type acide, ester, halogénure d'acide ou amide ou du type aminé, sel d'amine;

   **caractérisé en ce que** le rapport molaire **I/II** se définit comme suit :

   $$0{,}05 < \mathbf{I/II}$$

   et **en ce qu'**au moins l'une des entités **R** ou **R'** d'au moins l'un des monomères (**I**) ou (**II**) est aliphatique, cycloaliphatique ou arylaliphatique.

2. Copolyamide hyperbranché selon la revendication 1, **caractérisé en ce que** $0{,}125 \leq I/II \leq 2$

3. Copolyamide hyperbranché selon la revendication 1 ou 2, **caractérisé en ce que** les entités hydrocarbonées R, R' des monomères (I) et (II) respectivement, comprennent chacune :

   i au moins un radical aliphatique linéaire ou ramifié ;
   ii et/ou au moins un radical cycloaliphatique ;
   iii et/ou au moins un radical aromatique comportant un ou plusieurs noyaux aromatiques ;
   iv et/ou au moins un radical arylaliphatique

   ces radicaux (i), (ii), (iii) (iv) pouvant éventuellement être substitués et/ou comporter des hétéroatomes.

4. Copolyamide hyperbranché selon l'une des revendications 1 à 3 **caractérisé en ce qu'**au moins une partie des monomères bifonctionnels (**II**) se trouve sous forme de prépolymère.

5. Copolyamide hyperbranché selon la revendication 4, **caractérisé en ce que** les fonctions réactives de polymérisation **A**, **B**, **A'**, **B'** sont choisies dans le groupe comprenant les fonctions carboxyliques et aminés.

6. Copolyamide hyperbranché selon l'une quelconque des revendications 1 à 5, **caractérisé en ce qu'**il comprend des monomères "coeur" de formule (**III**) :

$$(\textbf{III}) \qquad R^1(\textbf{B''})_n$$

dans laquelle :

- $R^1$ est un radical hydrocarboné substitué ou non, du genre silicone, alkyle linéaire ou ramifié, aromatique, alkylaryle, arylalkyle ou cycloaliphatique pouvant comprendre des insaturations et/ou des hétéroatomes ;
- **B''** est une fonction réactive de même nature que **B** ou **B'** ;
- $n \geq 1$, de préférence $1 \leq n \leq 100$.

7. Copolyamide hyperbranché selon l'une quelconque des revendications 1 à 6, **caractérisé en ce qu'**il comprend des monomères "limiteurs de chaîne" de formule (**IV**) :

$$(\textbf{IV}) \qquad R^2\text{-}\textbf{A''}$$

dans laquelle :

- $R^2$ est un radical hydrocarboné substitué ou non, du genre silicone, alkyle linéaire ou ramifié, aromatique, arylalkyle, alkylaryle ou cycloaliphatique pouvant comprendre une ou plusieurs insaturations et/ou un ou plusieurs hétéroatomes.
- et **A''** est une fonction réactive de même nature que **A** ou **A'**.

8. Copolyamide hyperbranché selon l'une des revendications 1 à 7, **caractérisé en ce que** le monomère de formule (**I**) est un composé dans lequel **A** représente la fonction aminé, **B** la fonction carboxylique, R un radical aromatique et f = 2.

9. Copolyamide hyperbranché selon l'une quelconque des revendications 1 à 7, **caractérisé en ce que** le monomère (**I**) est choisi dans le groupe comprenant :

- l'acide 5-amino-isophtalique,
- l'acide 6-amino-undécandioïque,
- le diacide 3-aminopimélique,
- l'acide aspartique,
- l'acide 3,5-diaminobenzoïque,
- l'acide 3,4-diaminobenzoïque,
- la lysine,
- et leurs mélanges.

10. Copolyamide hyperbranché selon l'une quelconque des revendications 1 à 9, **caractérisé en ce que** le monomère bifonctionnel de formule (**II**) est :

- l'ε-caprolactame et/ou l'aminoacide correspondant : l'acide aminocaproïque,
- et/ou l'acide para ou métaaminobenzoïque,
- et/ou l'acide amino-11-undécanoïque,
- et/ou le lauryllactame et/ou l'aminoacide correspondant :

    - l'acide amino-12-dodécanoïque.

11. Copolyamide hyperbranché selon l'une quelconque des revendications 1 à 10, **caractérisé en ce que** le rapport molaire des monomères (**IV**) sur les monomères bifonctionnels (**I**) est défini comme suit :

$$\frac{(IV)}{(I)} \leq 10$$

de préférence

$$\frac{(IV)}{(I)} \leq 5$$

et plus préférentiellement encore

$$0 \leq \frac{(IV)}{(I)} \leq 2$$

et **en ce que** le rapport molaire des monomères fonctionnels (**III**) "noyaux" par rapport aux monomères plurifonctionnels (**I**), peut se définir comme suit :

$$\frac{(III)}{(I)} \leq 1$$

de préférence

$$\frac{(III)}{(I)} \leq 1/2$$

et plus préférentiellement encore

$$0 \leq \frac{(III)}{(I)} \leq 1/3$$

**12.** Copolyamide hyperbranché selon l'une quelconque des revendications 6 à 11, **caractérisé**

- **en ce qu'**il se présente sous forme de particules constituées chacune par une ou plusieurs structures arborescentes,
- et **en ce qu'**il est fonctionnalisé au point focal de la (ou des) structure(s) arborescente(s), par l'intermédiaire de monomères (**III**) porteurs de la ou des fonctionnalités considérées,
- etlou à la périphérie des structures arborescentes, par l'intermédiaire de monomères (**IV**) porteurs de la ou des fonctionnalités considérées.

**13.** Procédé de préparation d'un copolyamide hyperbranché selon l'une quelconque des revendications 1 à 12, **caractérisé en ce qu'**il consiste essentiellement à réaliser une polycondensation entre des monomères (**I**) entre eux et avec des monomères (**II**) qui réagissent également entre eux et éventuellement avec des monomères (**III**) et/ ou (**IV**) ; et ce dans des conditions de température et de pression appropriées ; cette polymérisation s'opérant en phase fondue, en phase solvant ou en phase solide, de préférence en phase fondue ou solvant ; le monomère (**II**) jouant avantageusement le rôle de solvant.

**14.** Procédé selon la revendication 13, **caractérisé en ce que** l'on met en oeuvre au moins un catalyseur de polycondensation.

**15.** Composé à base d'un copolyamide hyperbranché selon l'une des revendications 1 à 12, **caractérisé en ce qu'**il comporte :

- un copolyamide hyperbranché selon l'une des revendications 1 à 12 présentant des fonctions terminales,
- des composés chimiques liés à au moins une partie des fonctions terminales.

**16.** Composé selon la revendication 15 **caractérisé en ce que** les composés chimiques sont à base organique et liés aux fonctions terminales par liaison covalente.

**17.** Composé selon la revendication 16 **caractérisé en ce que** les composés sont choisis parmi les ions, les ions métalliques, les particules à base de métaux ou oxyde de métaux et sont liés aux fonctions terminales par interaction ionique ou chélatente.

18. Procédé de fabrication d'un composé selon l'une des revendications 15 à 17, **caractérisé en ce qu'**ils sont obtenus par traitement d'un copolyamide hyperbranché après synthèse de celui-ci.

19. Composé à base d'un copolyamide hyperbranché, selon l'une des revendications 1 à 12, **caractérisé en ce qu'**il comporte des fonctionnalités chimiques différentes des fonctions amides, portées par au moins un des monomères choisis parmi les monomères (I), (II), (III) et (IV).

20. Procédé de fabrication d'un composé selon la revendication 19, **caractérisé en ce qu'**il consiste essentiellement à réaliser une polycondensation entre des monomères (**I**) entre eux et avec des monomères (**II**) qui réagissent également entre eux et éventuellement avec des monomères (**III**) et/ou (**IV**), au moins un des monomère portant une fonctionnalité chimique différente des fonctions chimiques réagissant pour former les liaisons amides.

21. Utilisation des copolyamides hyperbranchés selon l'une quelconque des revendications 1 à 12, 15 à 17, 19, à titre d'agents modificateurs de rhéologie à l'état fondu, pour des polymères linéaires ou branchés.

22. Utilisation des copolyamides hyperbranchés selon la revendication 21, **caractérisée en ce que** les polymères sont des polyamides.

23. Utilisation des copolyamides hyperbranchés selon l'une quelconque des revendications 1 à 12, 15 à 17, 19, à titre d'agents modificateurs des propriétés thermomécaniques de matériaux polymères comprenant, de préférence, des polyamides et/ou des polyesters.

24. Utilisation du copolyamide hyperbranché selon l'une des revendications 12 et 15 à 17, 19, à titre d'additif, en particulier comme additif modificateur de l'hydrophilie / hydrophobie, de matériaux polymères comprenant des polyamides et/ou des polyesters.

25. Utilisation du copolyamide hyperbranché selon l'une des revendications 1 à 12, 15 à 17, 19, à titre d'additif modifiant les propriétés tinctoriales d'un matériau thermoplastique, de préférence un polyamide ou un polyester.

26. Utilisation selon l'une des revendications 23 ou 25 **caractérisé en ce que** le polyamide est le polyamide 6.

27. Utilisation du copolyamide hyperbranché selon la revendication 12 ou du composé selon l'une des revendications 15 à 17, 19 à titre de stabilisant de dispersions, de préférence aqueuses, de produits minéraux et/ou organiques.

28. Composition polymère thermoplastique **caractérisée en ce qu'**elle comprend :

   - une matrice polymère ;
   - au moins un additif comportant au moins un copolyamide hyperbranché selon l'une quelconque des revendications 1 à 12. ou un composé selon l'une quelconque des revendications 15 à 17, 19.

29. Composition polymère thermoplastique selon la revendication 28, **caractérisée en ce que** l'additif comportant le copolyamide hyperbranché est présent à raison de (exprimé en % en poids sec par rapport à la masse totale de la composition) :

   |  | 0,001 à 70 |
   |---|---|
   | de préférence | 0,001 à 50 |
   | et plus préférentiellement encore | 0,001 à 30. |

30. Composition selon l'une des revendications 28 ou 29, **caractérisée en ce que** la matrice est à base de polyamide 6.

31. Dispersion ou solution de préférence aqueuse, **caractérisée en ce qu'**elle comprend:

   - un milieu liquide, de préférence aqueux, de dispersion (ou de solubilisation),
   - au moins un produit organique et/ou minéral dispersé ;
   - et au moins un stabilisant comportant au moins un polyamide hyperbranché fonctionnalisé selon la revendication 12 ou un composé selon l'une des revendications 15 à 17,19.

**32.** Articles obtenus par mise en forme, de préférence par moulage, moulage par injection, injection/soufflage extrusion/soufflage, extrusion ou filage, de la composition selon l'une quelconque des revendications 28 à 30; les fils, les fibres, les films et les pièces moulées étant des articles particulièrement préférés.

**Patentansprüche**

**1.** Hyperverzweigtes Copolyamid vom Typ derjenigen, erhalten durch Umsetzung zwischen

- zumindest einem Monomeren der folgenden Formel I:

$$(I) \qquad A\text{-}R\text{-}B_f$$

worin A eine reaktive Funktion der Polymerisation eines ersten Typs ist, B eine reaktive Funktion der Polymerisation eines zweiten Typs ist und imstande ist, mit A zu reagieren, R eine gegebenenfalls Heteroatome aufweisende Kohlenwasserstoffeinheit ist und f die Gesamtanzahl der reaktiven Funktionen B je Monomeres darstellt: $f \geq 2$, vorzugsweise $2 \leq f \leq 10$;

- und zumindest einem bifunktionellen Monomeren der folgenden Formel (II):

$$(II) \qquad A'\text{-}R'\text{-}B' \text{ oder den entsprechenden Lactamen,}$$

worin A', B', R' die vorstehend angegebene Definition für A, B, beziehungsweise R in Formel (I) besitzen; wobei

- A, A' eine reaktive Funktion vom Typ Amin, Aminsalz oder vom Typ Säure, Ester, Säurehalogenid oder Amid ist;
- B, B' eine reaktive Funktion vom Typ Säure, Ester, Säurehalogenid oder Amid oder vom Typ Amin, Aminsalz ist;

**dadurch gekennzeichnet, daß** das Molverhältnis I zu II wie folgt definiert ist:

$$0,05 < I/II$$

und daß wenigstens eine der Einheiten R oder R' von zumindest einem der Monomeren I oder II aliphatisch, cycloaliphatisch oder arylaliphatisch ist.

**2.** Hyperverzweigtes Copolyamid gemäß Anspruch 1, **dadurch gekennzeichnet, daß** $0,125 \leq I/II \leq 2$.

**3.** Hyperverzweigtes Copolyamid gemäß Anspruch 1 oder 2, **dadurch gekennzeichnet, daß** die Kohlenwasserstoffeinheiten R, R' der Monomeren (I) beziehungsweise (II) jeweils umfassen:

  i) zumindest einen linearen oder verzweigten aliphatischen Rest;
  ii) und/oder zumindest einen cycloaliphatischen Rest;
  iii) und/oder zumindest einen aromatischen Rest, der ein oder mehrere aromatische Ringe enthält;
  iv) und/oder zumindest einen arylaliphatischen Rest

wobei diese Reste (i), (ii), (iii), (iv) gegebenenfalls substituiert sein können und/oder Heteroatome aufweisen können.

**4.** Hyperverzweigtes Copolyamid gemäß einem der Ansprüche 1 bis 3, **dadurch gekennzeichnet, daß** zumindest ein Teil der bifunktionellen Monomeren II sich in Form des Prepolymeren befindet.

**5.** Hyperverzweigtes Copolyamid gemäß Anspruch 4, **dadurch gekennzeichnet, daß** die reaktiven Funktionen der Polymerisation A, B, A', B' ausgewählt sind aus der Gruppe der Carboxylfunktionen und Aminfunktionen.

**6.** Hyperverzweigtes Copolyamid gemäß einem der Ansprüche 1 bis 5, **dadurch gekennzeichnet, daß** es "Kern"-Monomere der Formel (III) umfaßt:

$$(III) \qquad R^1(B'')_n$$

worin:

- $R^1$ ein substituierter oder unsubstituierter Kohlenwasserstoffrest, vom Typ Silikon, ein linearer oder verzweigter Alkylrest, ein aromatischer Rest, ein Alkylarylrest, ein Arylalkylrest oder ein cycloaliphatischer Rest ist, der Unsättigungen oder Heteroatome aufweisen kann;
- B'' eine reaktive Funktion der gleichen Art wie B oder B' ist;
- $n \geq 1$, vorzugsweise $1 \leq n \leq 100$.

7. Hyperverzweigtes Copolyamid gemäß einem der Ansprüche 1 bis 6, **dadurch gekennzeichnet, daß** es monomere "Kettenregler" der Formel (IV):

$$(IV) \qquad R^2\text{-}A''$$

umfaßt, worin.

- $R^2$ ein substituierter oder unsubstituierter Kohlenwasserstoffrest, vom Typ Silikon, ein linearer oder verzweigter Alkylrest, ein aromatischer Rest, ein Arylalkylrest, ein Alkylarylrest oder ein cycloaliphatischer Rest ist, der eine oder mehrere Unsättigungen und/oder ein oder mehrere Heteroatome aufweisen kann;
- und A'' eine reaktive Funktion vom gleichen Typ wie A oder A' ist.

8. Hyperverzweigtes Copolyamid gemäß einem der Ansprüche 1 bis 7, **dadurch gekennzeichnet, daß** das Monomere der Formel (1) eine Verbindung ist, worin A die Aminfunktion darstellt, B die Carboxylfunktion darstellt, R ein aromatischer Rest ist und $f = 2$.

9. Hyperverzweigtes Copolyamid gemäß einem der Ansprüche 1 bis 7, **dadurch gekennzeichnet, daß** das Monomere (I) ausgewählt ist unter:

- 5-Aminoisophthalsäure,
- 6-Aminoundecandisäure,
- 3-Aminopimelindisäure,
- Asparaginsäure,
- 3,5-Diaminobenzoesäure,
- 3,4-Diaminobenzoesäure,
- Lysin
- und deren Gemischen.

10. Hyperverzweigtes Copolyamid gemäß einem der Ansprüche 1 bis 9, **dadurch gekennzeichnet, daß** das bifunktionelle Monomere der Formel (II) ist:

- $\varepsilon$-Caprolactam und/oder die entsprechende Aminosäure: Aminocapronsäure,
- und/oder para- oder meta-Aminobenzoesäure,
- und/oder 11-Amino-undecansäure,
- und/oder Lauryllactam und/oder die entsprechende Aminosäure:

    12-Amino-dodecansäwe.

11. Hyperverzweigtes Copolyamid gemäß einem der Ansprüche 1 bis 10, **dadurch gekennzeichnet, daß** das Molverhältnis der Monomeren (IV) zu den bifunktionellen Monomeren (I) wie folgt definiert ist:

$$\frac{(IV)}{(I)} \leq 10$$

vorzugsweise

$$\frac{(IV)}{(I)} \leq 5$$

und noch bevorzugter

$$0 \leq \frac{(IV)}{(I)} \leq 2$$

und daß das Molverhältnis der funktionellen "Kern"-Monomeren (III), bezogen auf die plurifunktionellen Monomeren (I) wie folgt definiert ist:

$$\frac{(III)}{(I)} \leq 1$$

vorzugsweise

$$\frac{(III)}{(I)} \leq 1/2$$

und noch bevorzugter

$$0 \leq \frac{(III)}{(I)} \leq 1/3$$

12. Hyperverzweigtes Copolyamid gemäß einem der Ansprüche 6 bis 11, **dadurch gekennzeichnet, daß**

   - es in Form von Teilchen vorliegt, die jeweils aus einer oder mehreren baumartig verzweigten Strukturen bestehen,
   - und daß es funktionalisiert ist am fokalen Punkt der baumartig verzweigten Struktur(en) über Monomere (III), die Träger sind der in Betracht gezogenen Funktionalitäten),
   - und/oder an der Peripherie der baumartig verzweigten Strukturen über Monomere (IV), die Träger sind der in Betracht gezogenen Funktionalität(en).

13. Verfahren zur Herstellung eines hyperverzweigten Copolyamids gemäß einem der Ansprüche 1 bis 12, **dadurch gekennzeichnet, daß** es im wesentlichen darin besteht, eine Polykondensation durchzuführen zwischen Monomeren (I) untereinander und mit Monomeren (II), die auch untereinander reagieren und gegebenenfalls mit Monomeren (III) und/oder (IV); und dies unter geeigneten Bedingungen hinsichtlich Temperatur und Druck; wobei diese Polymerisation in der Schmelzphase, in Lösungsmittelphase oder in fester Phase, vorzugsweise in Schmelzphase oder Lösungsmittelphase, abläuft; wobei das Monomere (II) vorteilhaft die Rolle des Lösungsmittels übernimmt.

14. Verfahren nach Anspruch 13, **dadurch gekennzeichnet, daß** man zumindest einen Polykondensationskatalysator einsetzt.

15. Verbindung auf Basis eines hyperverzweigten Copolyamids gemäß einem der Ansprüche 1 bis 12, **dadurch gekennzeichnet, daß** sie umfaßt:

   - ein hyperverzweigtes Copolyamid gemäß einem der Ansprüche 1 bis 12, das endständige Funktionen aufweist;
   - chemische Verbindungen, die an zumindest einen Teil der endständigen Funktionen gebunden sind.

16. Verbindung gemäß Anspruch 15, **dadurch gekennzeichnet, daß** die chemischen Verbindungen auf organischer Basis sind und gebunden sind an endständige Funktionen über kovalente Bindung.

17. Verbindung gemäß Anspruch 16, **dadurch gekennzeichnet, daß** die Verbindungen ausgewählt sind unter den Ionen, den Metallionen, den Teilchen auf Basis von Metallen oder Metalloxid und daß sie gebunden sind an die endständigen Funktionen über ionische oder chelatbildende Wechselwirkung.

**18.** Verfahren zur Herstellung einer Verbindung gemäß einem der Ansprüche 15 bis 17, **dadurch gekennzeichnet, daß** sie erhalten werden durch Behandlung eines hyperverzweigten Copolyamids nach seiner Synthese.

**19.** Verbindung auf Basis eines hyperverzweigten Copolyamids gemäß einem der Ansprüche 1 bis 12, **dadurch gekennzeichnet, daß** sie chemische Funktionalitäten aufweist, die verschieden sind von den Amidfunktionen und die von zumindest einem der Monomeren, ausgewählt unter den Monomeren (I), (II), (III) und (IV), getragen werden.

**20.** Verfahren zur Herstellung einer Verbindung gemäß Anspruch 19, **dadurch gekennzeichnet, daß** es im wesentlichen darin besteht, eine Polykondensation durchzuführen zwischen den Monomeren (I) untereinander und mit den Monomeren (II), die ebenfalls untereinander reagieren und gegebenenfalls mit Monomeren (III) und/oder (IV), wobei zumindest eines der Monomeren eine chemische Funktionalität aufweist, die verschieden ist von den chemischen Funktionen, die unter Bildung von Amidbindungen reagieren.

**21.** Verwendung der hyperverzweigten Copolyamide gemäß einem der Ansprüche 1 bis 12, 15 bis 17, 19 als Mittel zur Modifizierung der Rheologie in geschmolzenem Zustand für lineare oder verzweigte Polymere.

**22.** Verwendung der hyperverzweigten Copolyamide gemäß Anspruch 21, **dadurch gekennzeichnet, daß** die Polymeren Polyamide sind.

**23.** Verwendung der hyperverzweigten Copolyamide gemäß einem der Ansprüche 1 bis 12, 15 bis 17, 19 als Mittel für die Modifizierung der thermomechanischen Eigenschaften von Polymermaterialien, die bevorzugt Polyamide und/oder Polyester umfassen.

**24.** Verwendung des hyperverzweigten Copolyamids gemäß einem der Ansprüche 12 und 15 bis 17, 19 als Additiv, insbesondere als Additiv für die Modifizierung der Hydrophilie/Hydrophobie von Polymermaterialien, die Polyamide und/oder Polyester umfassen.

**25.** Verwendung des hyperverzweigten Copolyamids gemäß einem der Ansprüche 1 bis 12. 15 bis 17, 19 als Additiv für die Modifizierung von Farbeigenschaften bzw. Färbeeigenschaften eines thermoplastischen Materials, vorzugsweise eines Polyamids oder eines Polyesters.

**26.** Verwendung gemäß einem der Ansprüche 23 oder 25, **dadurch gekennzeichnet, daß** das Polyamid Polyamid 6 ist.

**27.** Verwendung des hyperverzweigten Copolyamids gemäß Anspruch 12 oder der Verbindung gemäß einem der Ansprüche 15 bis 17, 19 als Stabilisierungsmittel für Dispersionen, vorzugsweise wässrige Dispersionen von mineralischen und/oder organischen Produkten.

**28.** Thermoplastische Polymerzusammensetzung, **dadurch gekennzeichnet, daß** sie umfaßt

- eine Polymermatrix;
- zumindest ein Additiv, umfassend zumindest ein hyperverzweigtes Copolyamid gemäß einem der Ansprüche 1 bis 12 oder eine Verbindung gemäß einem der Ansprüche 15 bis 17, 19.

**29.** Thermoplastische Polymerzusammensetzung, gemäß Anspruch 28, **dadurch gekennzeichnet, daß** das das hyperverzweigte Copolyamid enthaltende Additiv vorhanden ist in einer Menge von (ausgedrückt in Prozent Tockengewicht, bezogen auf die Gesamtmasse der Zusammensetzung):

|  | 0,001 bis 70 |
| --- | --- |
| vorzugsweise | 0,001 bis 50 |
| und noch bevorzugter | 0,001 bis 30 |

**30.** Zusammensetzung gemäß einem der Ansprüche 28 oder 29, **dadurch gekennzeichnet, daß** die Matrix auf Basis von Polyamid 6 ist.

**31.** Dispersion oder Lösung, vorzugsweise wässrige Lösung, **dadurch gekennzeichnet, daß** sie umfaßt

- ein flüssiges Milieu, vorzugsweise wässriges Milieu, der Dispersion (oder der Solubilisation);

- wenigstens ein organisches und/oder mineralisches dispergiertes Produkt;
- und wenigstens ein Stabilisierungsmittel, das zumindest ein funktionalisiertes, hyperverzweigtes Polyamid gemäß Anspruch 12 oder eine Verbindung gemäß einem der Ansprüche 15 bis 17,19 umfaßt.

32. Erzeugnisse, erhalten durch Formgebung, vorzugsweise durch Giessen, Spritzguß/Blasverformung, Extrusion/ Blasverfonnung, Extrusion oder Strangpressen der Zusammensetzung gemäß einem der Ansprüche 28 bis 30, wobei Fäden, Fasern, Filme und Formgegenstände die besonders bevorzugten Erzeugnisse sind.

**Claims**

1. Hyperbranched copolyamide of the type obtained by reaction between:

   - at least one monomex of formula (I) below:

$$(I) \qquad A\text{-}R\text{-}B_f$$

   in which A is a polymerization-reactive function of a first type, B is a polymerization-reactive function of a second type capable of reacting with A, R is a hydrocarbon-based species which Optionally comprises heteroatoms and f is the total number of reactive functions B per monomer: $f \geq 2$, preferably $2 \leq f \leq 10$;
   - and at least one difunctional monomer of formula (II) below:

$$(II) \qquad A'\text{-}R'\text{-}B' \text{ or the corresponding lactams,}$$

   in which A', B' and R' have the same definition as that given above for A, B and R, respectively, in formula (I); with

   - A or A' is a reactive function of the amine or amine salt type or of the acid, ester, acid halide or amide type ;
   - B or B' is a reactive function of the acid, ester, acid halide or amide type or of the amine or amine salt type;

   **characterized in that** the I/II molar ratio is defined as follows:

$$0.05 < I/II$$

   and **in that** at least one of the species R or R' of at least one of the monomers (I) or (II) is aliphatic, cycloaliphatic or arylaliphatic.

2. Hyperbranched copolyamide according to Claim 1, **characterized in that** $0.125 \leq I/II \leq 2$.

3. Hyperbranched copolyamide according to Claim 1 or 2, **characterized in that** the hydrocarbon-based species R and R' of the monomers (I) and (II) respectively each comprise:

   i at least one linear or branched aliphatic radical;
   ii and/or at least one cycloaliphatic radical;
   iii and/or at least one aromatic radical comprising one or more aromatic rings;
   iv and/or at least one arylaliphatic radical it being possible for these radicals (i), (ii), (iii) and (iv) optionally to be substituted and/or to comprise heteroatoms.

4. Hyperbranched copolyamide according to one of Claims 1 to 3, **characterized in that** at least some of the difunctional monomers (II) are in prepolymer form.

5. Hyperbranched copolyamide according to Claim 4, **characterized in that** the polymerization-reactive functions A, B, A' and B' are chosen from the group comprising carboxylic and amine functions.

6. Hyperbranched copolyamide according to any one of Claims 1 to 5, **characterized in that** it comprises "core" monomers of formula (III):

$$(III) \quad R^1(B'')_n$$

in which:

- R$^1$ is a substituted or unsubstituted hydrocarbon-based radical such as silicone, linear or branched alkyl, aromatic, alkylaryl, arylalkyl or cycloaliphatic which can comprise unsaturations and/or heteroatoms;
- B'' is a reactive function of the same nature as B or B' ;
- $n \geq 1$, preferably $1 \leq n \leq 100$.

7. Hyperbranched copolyamide according to any one of Claims 1 to 6, **characterized in that** it comprises "chain-limiting" monomers of formula (IV) :

$$(IV) \quad R^2\text{-}A''$$

in which:

- R$^2$ is a substituted or unsubstituted hydrocarbon-based radical such as silicone, linear or branched alkyl, aromatic, arylalkyl, alkylaryl or cycloaliphatic which can comprise one or more unsaturations and/or one or more heteroatoms;
- and A'' is a reactive function of the same nature as A or A'.

8. Hyperbranched copolyamide according to one of Claims 1 to 7, **characterized in that** the monomer of formula (I) is a compound in which A represents an amine function, B represents a carboxylic function, R represents an aromatic radical and f = 2.

9. Hyperbranched copolyamide according to any one of claims 1 to 7, **characterized in that** the monomer (I) is chosen from the group comprising:

- 5-aminoisophthalic acid,
- 6-aminoundecanedioic acid,
- 3-aminopimelic diacid,
- aspartic acid,
- 3,5-diaminobenzoic acid,
- 3,4-diaminobenzoic acid,
- lysine,
- and mixtures thereof.

10. Hyperbranched copolyamide according to any one of Claims 1 to 9, **characterized in that** the difunctional monomer of formula (II) is:

- ε-caprolactam and/or the corresponding amino acid: aminocaproic acid,
- and/or para- or meta-aminobenzoic acid,
- and/or 11-aminoundecanoic acid,
- and/or lauryllactam and/or the corresponding amino acid: 12-aminododecanoic acid.

11. Hyperbranched copolyamide according to any one of Claims 1 to 10, **characterized in that** the molar ratio of the monomers (IV) to the difunctional monomers (I) is defined as follows:

$$\frac{(IV)}{(I)} \leq 10$$

preferably

$$\frac{(IV)}{(I)} \leq 5$$

and even more preferably

$$0 \le \frac{(IV)}{(I)} \le 2$$

and **in that** the molar ratio of the "core" functional monomers (III) relative to the multifunctional monomers (I) may be defined as follows:

$$\frac{(III)}{(I)} \le 1$$

preferably

$$\frac{(III)}{(I)} \le 1/2$$

and even more preferably

$$0 \le \frac{(III)}{(I)} \le 1/3.$$

12. Hyperbranched copolyamide according to any one of Claims 6 to 11, **characterized**

   - **in that** it is in the form of particles each consisting of one or more arborescent structures,
   - and **in that** it is functionalized at the focal point of the arborescent structure(s) via monomers (III) bearing the functionality or functionalities under consideration,
   - and/or at the periphery of the arborescent structures, via monomers (IV) bearing the functionality or functionalities under consideration.

13. Process for preparing a hyperbranched copolyamide according to any one of Claims 1 to 12, **characterized in that** it consists essentially in carrying out a polycondensation between monomers (I) with each other and with monomers (II) which also react with each other and optionally with monomers (III) and/or (IV); this taking place under suitable temperature and pressure conditions; this polymerization being performed in the melt, in solution or in the solid state, preferably in the melt or in solution, the monomer (II) advantageously acting as solvent.

14. Process according to claim 13, **characterized in that** at least one polycondensation catalyst is used.

15. Compound based on a hyperbranched copolyamide according to one of Claims 1 to 12, **characterized in that** it comprises:

   - a hyperbranched copolyamide according to one of Claims 1 to 12 having terminal functions;
   - chemical compounds linked to at least some of the terminal functions.

16. Compound according to Claim 15, **characterized in that** the chemical compounds are organic-based and linked to the terminal functions by a covalent bond.

17. Compound according to Claim 16, **characterized in that** the compounds are chosen from ions, metal ions, particles based on metals or metal oxides and are linked to the terminal functions by ionic or chelating interaction.

18. Process for manufacturing a compound according to one of Claims 15 to 17, **characterized in that** it is obtained by the treatment of a hyperbranched copolyamide after synthesis thereof.

19. Compound based on a hyperbranched copolyamide according to one of Claims 1 to 12, **characterized in that** it includes chemical functionalities differing from the amide functions, carried by at least one of the monomers chosen from the monomers (I). (II), (III) and (IV).

20. Process for manufacturing a compound according to Claim 19, **characterized in that** it essentially consists in carrying out a polycondensation between monomers (I) with themselves and with monomers (II) which also react together and optionally with monomers (III) and/or (IV), at least one of the monomers carrying a chemical functionality different from the chemical functions reacting to form the amide linkages.

21. Use of the hyperbranched copolyamides according to any one of Claims 1 to 12, 15 to 17 and 19, as melt rheology modifiers, for linear or branched polymers.

22. Use of the hyperbranched copolyamides according to Claim 21, **characterized in that** the polymers are polyamides.

23. Use of the hyperbranched copolyamides according to any one of Claims 1 to 12, 15 to 17 and 19, as agents for modifying the thermomechanical properties of polymer materials preferably comprising polyamides and/or polyesters.

24. Use of the hyperbranched copolyamide according to one of Claims 12 and 15 to 17 and 19, as an additive, in particular as an additive for modifying the hydrophilicity/hydrophobicity of polymer materials comprising polyamides and/or polyesters.

25. Use of the hyperbranched copolyamide according to one of Claims 1 to 12, 15 to 17 and 19, as an additive modifying the dyeing properties of a thermoplastic, preferably a polyamide or a polyester.

26. Use according to either of Claims 23 and 25, **characterized in that** the polyamide is nylon-6.

27. Use of the hyperbranched copolyamide according to Claim 12 or of the compound according to one of Claims 15 to 17 and 19, as a stabilizer for dispersions, preferably aqueous dispersions, of inorganic and/or organic products.

28. Thermoplastic polymer composition, **characterized in that** it comprises:

  - a polymer matrix;
  - at least one additive comprising at least one hyperbranched copolyamide according to any one of Claims 1 to 12 or a compound according to any one of Claims 15 to 17 and 19.

29. Thermoplastic polymer composition according to Claim 28, **characterized in that** the additive which comprises the hyperbranched copolyamide is present in a proportion (expressed as % by dry weight relative to the total mass of the composition) of:

  0.001 to 70
  preferably        0.001 to 50
  and even more preferably        0.001 to 30.

30. Composition according to either of Claims 28 and 29, **characterized in that** the matrix is based on nylon-6.

31. Dispersion or solution, which is preferably aqueous, **characterized in that** it comprises:

  - a liquid dispersion (or solubilization) medium, which is preferably aqueous;
  - at least one dispersed organic and/or inorganic product;
  - and at least one stabiliser comprising at least one functionalized hyperbranched polyamide according to Claim 12 or a compound according to any one of Claims 15 to 17 and 19.

32. Articles obtained by formation, preferably by moulding, injection-moulding, injection/blow-moulding, extrusion/blow-moulding, extrusion or spinning, of the composition according to any one of Claims 28 to 30; yarns, fibres, films and moulded parts being articles that are particularly preferred.

**Figure I**

**Figure 2**

FIGURE 3

FIGURE 4